(19) Europäisches Patentamt / European Patent Office / Office européen des brevets

(11) **EP 3 199 701 B1**

(12) **EUROPEAN PATENT SPECIFICATION**

(45) Date of publication and mention
of the grant of the patent:
**27.10.2021 Bulletin 2021/43**

(21) Application number: **15845104.7**

(22) Date of filing: **25.09.2015**

(51) Int Cl.:
*C08J 5/24* *(2006.01)*    *H01G 9/02* *(2006.01)*
*H01G 11/52* *(2013.01)*   *H01M 50/409* *(2021.01)*
*B32B 29/00* *(2006.01)*   *D21H 13/08* *(2006.01)*

(86) International application number:
**PCT/JP2015/077146**

(87) International publication number:
**WO 2016/047764 (31.03.2016 Gazette 2016/13)**

(54) **THIN-FILM SHEET INCLUDING CELLULOSE FINE-FIBER LAYER**

DÜNNSCHICHTFOLIE MIT CELLULOSEFEINFASERSCHICHT

FEUILLE DE FILM MINCE COMPRENANT UNE COUCHE DE FIBRE FINE DE CELLULOSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2014 JP 2014197548**

(43) Date of publication of application:
**02.08.2017 Bulletin 2017/31**

(73) Proprietor: **Asahi Kasei Kabushiki Kaisha
Chiyoda-ku,
Tokyo 100-0006 (JP)**

(72) Inventors:
 • **ONO, Hirofumi
   Tokyo 101-8101 (JP)**
 • **TAKASU, Shuji
   Tokyo 101-8101 (JP)**

 • **SAITO, Yamato
   Tokyo 101-8101 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**JP-A- H11 168 033     JP-A- 2000 003 834
JP-A- 2008 106 152     JP-A- 2008 186 707
JP-A- 2010 232 202     JP-A- 2010 287 697
JP-A- 2012 036 529     US-B1- 6 511 774**

 • **None**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a composite prepreg sheet comprising a thin sheet having a fine network structure formed by fine cellulose fibers. The thin sheet represents a core material for a printed wiring board for electronic materials, a core material for an insulating film for electronic materials, a core material for a core material for electronic materials, and a separator for use in power storage devices, which use the thin sheet.

BACKGROUND ART

Fiber-reinforced plastics (FRP) have recently attracted considerable attention in various industrial fields as lightweight, high-strength materials. Since fiber-reinforced composite materials composed of a matrix resin and reinforcing fibers such as glass fibers, carbon fibers or aramid fibers demonstrate superior strength, elastic modulus and other dynamic characteristics despite having a lighter weight in comparison with competing metals, they are used in numerous fields such as aircraft members, aerospace members, automobile members, marine vessel members, civil engineering members and sporting goods. In applications requiring high performance in particular, carbon fibers are frequently used as reinforcing fibers due to their superior specific strength and specific elastic modulus. In addition, heat-curable resins such as unsaturated polyester resins, vinyl ester resins, epoxy-based resins, phenol resins, cyanate ester resins or bismaleimide resins, are frequently used as matrix resins, and among these, epoxy-based resins are used particularly frequently due to their superior adhesiveness with carbon fibers. More recently, vacuum assisted resin transfer molding (VaRTM) is being employed to inexpensively produce comparatively large, fiber-reinforced plastic compacts by molding fiber-reinforced plastic in a reduced pressure atmosphere created by drawing a vacuum (see, for example, Patent Document 1). Although this technology is suited for improving the heat resistance and strength of resins, since the fiber diameter of fibers per se cannot be inherently controlled to be small enough to accommodate the reduced size and thickness of electronic materials (namely, controlled to a thickness of several tens of micrometers) accompanying recent trends towards more sophisticated functions and other advances in the field of electronics, the application of this technology has encountered difficulties. Moreover, electronic members are also required to be superior in terms of low thermal expansion and low warping, while also exhibiting little dimensional deformation and warping when connecting components to a metal-clad laminate or printed wiring board by reflow soldering, in order to accommodate reduced rigidity of the substrate per se attributable to reductions in thickness.

Therefore, as a result of proceeding with studies on a technology that realizes both thin sheet adaptability and thermal stability, we focused on a cellulose nanofiber sheet that enables thickness to be controlled at the micron level with fine fibers and demonstrates extremely high thermal stability attributable to a hydrogen bond network. It was then hypothesized that the aforementioned problems may be able to be solved by providing a fiber-reinforced plastic obtained by compounding this cellulose nanofiber sheet with resin followed by a survey of peripheral technologies. Patent Documents 2 and 3 indicated below report on a separator for a power storage device that uses cellulose fine fibers having a maximum fiber diameter of 1,000 nm or less and degree of crystallinity as determined by solid NMR of 60% or more. These technologies provide a fine fiber cellulose sheet having a number average fiber diameter of 200 nm or less from the viewpoint of facilitating the formation of a microporous structure. However, although a fine fiber cellulose sheet having a number average fiber diameter of 200 nm or less has high porosity, it was determined to have low resin impregnability due to the respective pore diameter being excessively small. For this reason, the sheet was unsuitable for compounding with resin, and thus a technology has yet to be established that enables the stable production of a sheet having both low thermal expansion and heat resistance, as required by base materials used in the art, while also retaining sheet thickness of 25 $\mu$m or less.

In addition, a separator for a power storage device is another example of an application that requires a sheet to have thin sheet adaptability in the same manner as described above. For example, power storage devices mainly consist of battery-type devices in the manner of nickel-hydrogen batteries or lithium ion secondary batteries, and capacitor-type devices in the manner of aluminum electrolytic capacitors or electric double-layer capacitors. In the past, although the capacitance of capacitor-type devices was comparatively low on the order of several picofarads (pF) to several millifarads (mF), large-capacitance capacitors have recently appeared in the manner of electric double-layer capacitors, and are reaching a level comparable to that of battery-type devices from the viewpoint of energy density as well. Large-capacitance capacitors demonstrate characteristics unique to capacitors that are not found in conventional batteries, consisting of (1) superior repetitive resistance as a result of not employing an electrochemical reaction, and (2) high output density enabling storage electricity to be output immediately, and are attracting attention as on-board power storage devices for use in next-generation vehicles in the manner of hybrid vehicles and fuel cell vehicles.

These power storage devices have naturally been suitably selected corresponding to the application thereof and have been used in fields commensurate to each device. Among these, the power storage devices for next-generation vehicles as describe above, for example, are being developed by numerous researchers based on expectations of a huge new market. The development of fuel cells for use in fuel cell vehicles can be said to be the most active field. With respect to power storage devices for next-generation vehicles in particular, since there are many cases in which new levels of performance (such as high-temperature tolerance in the usage environment and even higher levels of energy density) are required that were not required in conventional applications, improvements are being aggressively made at the level of the members that compose these power storage devices.

With respect to the separator that functions as an important member of many power storage devices, although the required performance thereof naturally differs according to the type of power storage device, with respect to recent vehicle applications, the separator is required realize the absence of short-circuiting (short-circuit resistance) caused by repeated charging and discharging despite being a thin sheet, as well as satisfy performance requirements consisting of (1) maintaining performance over a long period of time in the environment in which the device is used (in terms of, for example, high temperatures in the presence of a charging atmosphere or stability over a long period of time), and (2) the formation of a power storage device that demonstrates high volume energy density in an attempt to increase capacity without increasing size in confined spaces (or reduces size and weight using the same function).

The required properties of separators as described above can be correlated with the structural characteristics of separators in the manner indicated below. In the case of a low internal resistance separator that has adequate air permeability despite having pores that are made to be as fine as possible while also contributing to reductions in internal resistance, the separator is required to be essentially composed of a heat-resistant material with respect to requirement (1), and be much thinner in comparison with existing separator sheets in order to solve requirement (2) .

Numerous inventions have been devised relating to cellulose-based separators having superior surface characteristics in terms of impregnability with respect to numerous electrolytes in order to solve these problems. For example, the following Patent Document 4 reports on a technology that uses a separator, in which a beaten raw material of beatable, solvent-spun cellulose fibers is used for the raw material, in an electric double-layer capacitor. This publication discloses the obtaining of a separator that has an extremely dense structure due to the fibrils obtained by beating, is highly dense in order to improve short-circuit defect rate, and maintains pathways in the form of through holes through which ions pass in order to improve internal resistance as a result of using a beaten raw material of beatable, solvent-spun cellulose fibers for the raw material of the separator. On the other hand, since thick fibers remain, the only examples indicated are those of separators having thicknesses of no less than 25 $\mu$m, and it is described that the formation of a thinner sheet would be difficult, thereby preventing this technology from satisfying the requirement of highly efficient power storage.

In addition, Patent Documents 2 and 3 report a separator for power storage that uses cellulose fibers having a maximum fiber diameter of 1,000 nm or less and a degree of crystallinity as determined by solid NMR of 60% or more. These technologies disclose the formation of a separator for a power storage device using fine cellulose fibers having a number average fiber diameter of 200 nm or less from the viewpoint of facilitating the formation of a microporous structure. Although these technologies allow the demonstration of low internal resistance by forming an ultra-microporous structure by making cellulose fiber diameter to be extremely small, in a power storage device that uses this separator, although the fibers are excessively fine and surface area is large, it cannot be said to be resistant to the oxidation-reduction reaction that proceeds around the separator when in contact with an electrode, or in other words, cannot be said to retain adequate performance with respect to durability. For this reason, a technology has yet to be established that is capable of employing a realistic method to provide a separator that satisfies all of the required characteristics for use as a separator in the manner of the requirements of vehicle applications, and thus does not lead to a solution or actually solve the problems of both (1) and (2) as previously described.

JP 2010-287697 **discloses a single layer thin film sheet including a cellulose fine fiber layer comprising regenerated cellulose fine fiber (solvent spun cellulose), wherein (1) the fiber diameter of the fine fiber is 0.5** $\mu$m; **(2) the air impermeability is 8 s/100 ml; and (3) the film thickness is 10** $\mu$m.

Prior Art Documents

Patent Documents

Patent Document 1: Japanese Unexamined Patent Publication No. S60-83826
Patent Document 2: Japanese Patent No. 4628764
Patent Document 3: International Publication No. WO 2006/004012
Patent Document 4: Japanese Unexamined Patent Publication No. 2000-3834

DISCLOSURE OF THE INVENTION

Problems to be Solved by the Invention

With the foregoing in view, an object of the present invention is to provide a thin sheet that realizes both improvement of thermal stability, required by, for example, insulating films for electronic materials (in terms of coefficient of linear thermal expansion and retention of elasticity at high temperatures) and sheet strength despite being a thin film, and provide a thin sheet material that demonstrates superior short-circuit resistance and physiochemical stability required by separators for power storage devices, realizes unique required performance in the manner of low internal resistance as a device, and further demonstrates superior heat resistance and long-term stability.

Means for Solving the Problems

As a result of conducting extensive studies to solve the aforementioned problems, the inventors of the present invention found that a microporous and highly porous fine cellulose sheet composed of fine cellulose fibers, designed such that the specific surface area equivalent fiber diameter of regenerated fine cellulose fibers is 0.20 $\mu$m to 2.0 $\mu$m, air impermeability is 1 s/100 ml to 100,000 s/100 ml, and sheet thickness is 2 $\mu$m to 22 $\mu$m, has an extremely high level of performance as a thin sheet material capable of solving the aforementioned problems, thereby leading to completion of the present invention.

Namely, the present invention is as indicated below.

[1] A composite prepreg sheet containing:

(A) a thin sheet composed of a single layer or multiple layers of three layers or less, which includes at least one layer of fine cellulose fibers containing 50% by weight or more of regenerated fine cellulose fibers, and satisfies the following requirements:

(1) the specific surface area equivalent fiber diameter of fibers that compose the layer of fine cellulose fibers, determined as described in the description, is 0.20 $\mu$m to $\mu$2.0 m,
(2) the air impermeability, determined as described in the description, is 1 s/100 ml to 100,000 s/ml, and
(3) the sheet thickness, determined as described in the description, is 2 $\mu$m to 22 $\mu$m,
and

(B) a heat-curable resin and/or a photo-curable resin.

[2] The composite prepreg sheet according to [1], wherein the specific surface area equivalent fiber diameter of fibers that compose the layer of fine cellulose fibers is 0.20 $\mu$m to 0.45 $\mu$m.
[3] The composite prepreg sheet according to [1] or [2], wherein natural fine cellulose fibers are contained in the layer of fine cellulose fibers at less than 50% by weight.
[4] The composite prepreg sheet according to any of [1] to [3], wherein fine fibers composed of an organic polymer other than cellulose are contained in the layer of fine cellulose fibers at less than 50% by weight.
[5] The composite prepreg sheet according to any of [1] to [4], wherein the fine cellulose fiber layer contains a reactive crosslinking agent at 10% by weight or less.
[6] The composite prepreg sheet according to any of [1] to [5], wherein a base layer in the form of a nonwoven fabric or paper having a basis weight of 3 g/m$^2$ to 20 g/m$^2$ is contained as one layer of the multilayer structure having three layers or less.
[7] The composite prepreg sheet according to any of [1] to [6], wherein the resin (B) contains inorganic particles at less than 50% by weight.
[8] The composite prepreg sheet according to [7], wherein the inorganic particles are one or more types of inorganic particles selected from the group consisting of $SiO_2$, $TiO_2$, $Al_2O_3$, $ZrO_2$, MgO, ZnO and $BaTiO_3$ particles.

Effects of the Invention

The thin sheet of the present embodiment is thin and has superior uniformity and retains a limited range of air impermeability, or in other words, pore diameter.
For this reason, when using as a core material for fiber-reinforced plastic, for example, it can impart thermal stability (reduction of coefficient of linear thermal expansion and retention of elasticity at high-temperatures) when compounding with a resin. In addition, it is also able to both ensure sheet strength and realize thermal stability with a thin film when using as a core material for a printed wiring board, core material for an insulating film or core material for a core for electronic materials. Moreover, in the case of using as a separator for a power storage device, it demonstrates superior short-circuit resistance, heat resistance and physicochemical stability despite being a thin sheet, and the power storage device in which it is used is able to realize superior electrical characteristics (such as low internal resistance or low leakage current value) and long-term stability.

EMBODIMENTS FOR CARRYING OUT THE INVENTION

The following provides a detailed explanation of embodiments of the present invention.

The present embodiment is able to provide a cellulose nanofiber having a prescribed range of fiber diameter by reducing diameter as a result of using regenerated cellulose for the raw material. A thin sheet produced as a result thereof is thin, has superior uniformity, and has a limited range of air impermeability, or in other words, pore diameter. For this reason, when using as a core material for fiber-reinforced plastic, for example, it can impart thermal stability (reduction of coefficient of linear thermal expansion and retention of elasticity at high-temperatures) when compounding with a resin. In addition, it is also able to both ensure sheet strength and realize thermal stability with a thin film when using as a core material for a printed wiring board, core material for an insulating film or core material for a core for electronic materials. Moreover, in the case of using as a separator for a power storage device, it demonstrates superior short-circuit resistance, heat resistance and physicochemical stability despite being a thin sheet, and the power storage device in which it is used is able to realize superior electrical characteristics (such as low internal resistance or low leakage current value) and long-term stability.

The thin sheet of the present embodiment is a thin sheet composed of a single layer or multiple layers of three layers or less, which includes at least one layer of **fine cellulose fibers** containing 50% by weight or more of regenerated fine cellulose fibers, and satisfies the following requirements:

(1) specific surface area equivalent fiber diameter of fibers that compose the fine cellulose fiber layer is 0.20 $\mu$m to 2.0 $\mu$m,
(2) air impermeability is 1 s/100 ml to 100,000 s/ml, and
(3) sheet thickness is 2 $\mu$m to 22 $\mu$m.

The thin sheet can be preferably used as a thin core material for a fiber-reinforced plastic film, as a core material for a printed wiring board, core material for an insulating film or core material for a core for electronic materials, or as a separator for a power storage device. The following provides an explanation of the reasons for this.

Demands for reduced size and thickness are high in the field of, for example, fiber-reinforced plastic films, and particularly in the field of electronic materials. For example, there is a demand for reducing the thickness of insulating films used as a means for providing an insulating film between each wiring layer when laminating printed wiring boards or building up layers of printed wiring from the viewpoints of reducing the size and weight of a device. These application fields require core materials for fiber-reinforced plastic films that are thin, have superior processing suitability in terms of resin impregnability, and demonstrate high thermal stability.

In addition, when attempting to lower internal resistance in a power storage device, there is ideally no separator present, or in other words, a state in which the space where the separator is present is filled with electrolyte is desirable. This is because the constituent materials of the separator, which is inherently a non-conducting solid, have extremely high electrical resistance with respect to electrolyte. However, since this results in the problem of short-circuiting based on contact between the positive and negative electrodes, a separator is required that has as high a porosity as possible, or in other words, has as much space as possible that can be substituted with electrolyte.

Although possible types of separators include non-woven fabric separators as in the present invention and microporous film separators (in which the film has typically been made porous), the inventor of the present invention found that, in the case of assuming equal degrees of through hole size and equal degrees of porosity, a cellulose-based non-woven fabric is particularly preferable. The reason why cellulose is preferable for the material is that cellulose has amphiphilic surface characteristics (see, for example, H. Ono, et al., Trans. Mat. Res. Soc. Jpn., 26, 569-572 (2001)), and has extremely favorable wettability with respect to the aqueous electrolytes or organic electrolytes used in many power storage devices. In actuality, cellulose non-woven fabric (paper) is used as a separator in aluminum electrolytic capacitors and lead storage batteries. In addition, the reason for non-woven fabric-based sheets being superior to microporous films is that, in contrast to the former containing closed pores (pores in which one side of the pore does not communicate with a through hole) in addition to open pores (through holes or pores in which both sides of the pore communicate with a through hole), the latter is structurally composed nearly entirely of open pores, and in the case of favorable surface wettability, a state is created in which nearly all of the voids are filled with electrolyte. In the case of microporous films in which closed pores are present, and particularly when pore diameter is small, voids are present even after having been impregnated with electrolyte due to various reasons such as surface tension. Since a gaseous phase such as air basically has a higher resistance value in comparison with electrolyte, the presence of closed pores inhibits reductions in internal resistance.

Moreover, although another necessary measure for reducing internal resistance is to reduce the sheet thickness of the separator, there are limitations on the degree to which the sheet thickness of non-woven fabric can be reduced in the case of ordinary fibers (even in the case of narrow fibers having a fiber diameter of several micrometers or more). This is because, when a thin, highly porous separator is attempted to be fabricated with comparatively thick fibers, the through hole diameter ends up becoming large resulting in the occurrence of problems with short-circuit resistance. Conversely speaking, when a thin non-woven fabric-based sheet that contributes to reduction of internal resistance is attempted to be provided with high porosity and fine through hole diameter, it is essential to use cellulose fibers having an extremely fine fiber diameter.

The following provides a detailed explanation of the thin sheet of the present embodiment.

First, an explanation is provided of the fine cellulose fibers that compose the thin sheet of the present embodiment.

In the present embodiment, regenerated cellulose refers to a substance obtained by regenerating natural cellulose by dissolving or subjecting to crystal swelling (mercerization) treatment, and is referred to as β-1,4-glucan (glucose polymer) having a molecular arrangement so as to impart a crystal diffraction pattern (type II cellulose crystals) having for the peaks thereof diffraction angles equivalent to lattice spacing of 0.73 nm, 0.44 nm and 0.40 nm as determined by particle beam diffraction. In addition, in terms of the X-ray diffraction pattern, regenerated cellulose regenerated cellulose fibers such as rayon, cupra or tencel fibers for which an X-ray diffraction pattern having a 2θ range of 0° to 30° has one peak at $10° \leq 2θ < 19°$ and two peaks at $19° \leq 2θ \leq 30°$. Among these, fibers are used preferably that have been reduced in diameter using cupra or tencel fibers, in which the molecules thereof are highly oriented in the axial direction of the fibers, as raw materials from the viewpoint of facilitating diameter reduction.

The maximum fiber diameter of the regenerated fine cellulose fibers is preferably 15 μm or less, more preferably 10 μm or less, even more preferably 5 μm or less and most preferably 3 μm or less. Here, a maximum fiber diameter of 15 μm or less means that fibers having a fiber diameter in excess of 15 μm are unable to be confirmed at all in images of cellulose non-woven fabric measured under the conditions indicated below with a scanning electron microscope (SEM).

An SEM image of the surface of the separator is sampled at a magnification factor equivalent to 10,000X, and in the case the fiber diameter of any entangled fiber contained in this image is 15 μm or less, an arbitrary portion of the cast surface is similarly observed in an SEM image, and fibers similarly having a fiber diameter in excess of 15 μm are unable to be confirmed for a total of 100 fibers or more, the maximum fiber diameter is defined as being 15 μm or less. However, in the case several fine fibers are bundled together and can be clearly confirmed to have a fiber diameter of 15 μm or more, they are not treated as being fibers having a fiber diameter of 15 μm or more. Since sheet thickness ends up becoming excessively thick if maximum fiber diameter exceeds 15 μm, it becomes difficult to ensure uniformity of pore diameter and the like for producing a thin sheet, fiber-reinforced plastic, electronic insulating film or even a separator, thereby making this undesirable.

In the thin sheet of the present embodiment, the specific surface area equivalent fiber diameter of the **fibers that compose the** fine cellulose fiber layer containing 50% by weight or more of regenerated cellulose is preferably 2.0 μm or less, more preferably 1.0 μm or less, even more preferably 0.45 μm or less and most preferably 0.40 μm or less. The following provides an explanation of specific surface area equivalent fiber diameter. After first evaluating specific surface area by nitrogen adsorption using the BET method, the following equation relating to specific surface area and fiber diameter was derived based on a cylindrical model in which the fibers that compose the separator are in an ideal state with respect to specific surface area in which there is no occurrence whatsoever of fusion between fibers, and the surface is assumed to be composed of fibers in the shape of cylinders in which cellulose density is d (g/cm$^3$) and L/D (L: fiber length, D: fiber diameter (units: μm for both) is infinitely large.

$$\text{Specific surface area} = 4/(dD) \ (m^2/g)$$

The value obtained by converting to fiber diameter D by substituting surface area as determined by BET for the specific surface area of the above equation and substituting d = 1.50 g/cm$^3$ for the value of cellulose density is defined as the specific surface area equivalent fiber diameter. Here, measurement of BET specific surface area was carried out with a specific surface area/micropore distribution measuring instrument (Beckman Coulter Inc.) by measuring the amount of nitrogen gas adsorbed at the boiling point of liquid nitrogen from about 0.2 g of sample using the program provided with this instrument followed by calculating specific surface area.

The thin sheet of the present embodiment allows the providing of a preferable thin sheet having a uniform thickness distribution by selecting the specific surface area equivalent fiber diameter of the **fibers that compose the fine cellulose** fiber layer containing 50% by weight or more of regenerated fine cellulose fibers to be within the aforementioned range. If the specific surface area equivalent fiber diameter of the fine cellulose fiber layer containing 50% by weight or more of regenerated cellulose exceeds 2.0 $\mu$m, surface irregularities occur in the surface of the aforementioned fine fiber sheet and the distribution of the microporous structure becomes larger since fiber diameter is excessively thick. Namely, since pores having a large pore diameter are dispersed therein, a thin sheet having superior uniformity cannot be provided. In addition, in the case of using the thin sheet of the present embodiment as a separator, if the specific surface area equivalent fiber **diameter of the fibers that compose the fine cellulose fiber layer exceeds 2.0** $\mu$m, this is incompatible with one of the objects of the present invention of attempting to realize reduced thickness while retaining short-circuit resistance, thereby again making this undesirable.

In the thin sheet of the present embodiment, the specific surface area equivalent fiber diameter of the **fibers that compose the fine cellulose fiber layer containing 50% by weight or** more of regenerated fine cellulose fibers is preferably 0.20 $\mu$m or more and more preferably 0.25 $\mu$m or more. If the specific surface area equivalent fiber diameter of **the fibers that compose the fine cellulose fiber layer containing 50% by weight** or more of regenerated cellulose is less than 0.20 $\mu$m, the pore diameter of the fine fiber sheet becomes excessively small. For this reason, in addition to resin not being impregnated when compounding the resin with the thin sheet in a fiber-reinforced plastic application, the excessively narrow fiber diameter causes deterioration after having assembled a power storage device and evaluated the long-term stability thereof by subjecting to repeated charging and discharging, while also leading to an increase in internal resistance over time and generation of gas, thereby making this undesirable.

The thin sheet of the present embodiment contains regenerated fine cellulose fibers preferably at 50% by weight or more, more preferably at 60% by weight or more, even more preferably at 70% by weight or more and most preferably at 80% by weight or more. The use of fine fibers containing 50% by weight or more of regenerated cellulose inhibits contraction of the fine fiber layer during drying and makes it possible to retain pores and pore diameter in the fine fiber layer when forming a sheet by a papermaking method or coating method using an aqueous slurry of cellulose nanofibers. Thus, as a result of facilitating compounding by facilitating resin impregnation when compounding the thin sheet with a resin in a fiber-reinforced plastic application, and making the number of confounding points of the regenerated fine cellulose fibers to be greater than that of an ordinary cellulose fiber sheet, thermal stability when compounding with resin (in terms of decreased coefficient of linear thermal expansion and retention of elasticity at high-temperatures) can be enhanced.

The thin sheet of the present embodiment is characterized in that the air impermeability thereof is 1 s/100 cm$^3$ to 100,000 **s/100** cm$^3$. Here, air impermeability refers to the value measured based on the Gurley tester method described in JIS P 8117. Air impermeability is more preferably within the range of 2 s/100cm$^3$ to 10,000 s/100 **cm$^3$,** even more preferably within the range of 5 s/100 cm$^3$ to 1,000 **s/100** cm$^3$ and most preferably within the range of 8 s/100 cm$^3$ to 40 **s/100** cm$^3$. In the case of a sheet having air impermeability of lower than 1 **s/100** cm$^3$, it is difficult to produce a defect-free, uniform sheet despite being composed of fine fibers. Moreover, problems occur in terms of short circuit resistance and strength and function as a separator is no longer demonstrated, thereby making this undesirable. In addition, in the case air impermeability exceeds 100,000 s/100 **cm$^3$,** either porosity decreases or pore diameter becomes excessively small. Therefore, when the thin sheet of the present invention is used as a fiber-reinforced plastic, resin is unable to impregnate the thin sheet, compounding is incomplete, and the inherently demonstrated thermal stability of a composite sheet (in terms of reduction of coefficient of linear thermal expansion and retention of elasticity at high-temperatures) ends up being lost. In addition, this is also disadvantageous in terms of ion permeability of the electrolyte when using as a separator since it acts with the effect of increasing internal resistance, while in the case of applying as a base material for a fiber-reinforced plastic film, the poor impregnability of the compounded resin also makes this undesirable for use as a thin sheet.

Although the thin sheet of the present embodiment can be obtained by forming fine cellulose fibers into the shape of a sheet as previously described, the sheet thickness is substantially 2 $\mu$m to 22 $\mu$m due to processing and functional restrictions. Here, sheet thickness is measured by using a surface contact-type sheet thickness gauge such as the sheet thickness gauge manufactured by Mitutoyo Corp. (Model ID-C112XB), cutting out a square piece from the separator measuring 10.0 cm $\times$ 10.0 cm and taking the average value of measured values obtained at five points at various locations to be sheet thickness T ($\mu$m). In addition, basis weight W0 (g/m$^2$) of a sheet can be calculated from sheet thickness T ($\mu$m) of the square piece measuring 10.0 cm $\times$ 10.0 cm cut out during measurement of sheet thickness and the weight W (g) thereof using the equation indicated below.

$$W0 = 100 \times W$$

The sheet thickness of the thin sheet of the present embodiment is more preferably 5 $\mu$m to 21 $\mu$m and even more preferably 8 $\mu$m to 19 $\mu$m. If sheet thickness is within the aforementioned range, thickness can be minimized when producing a composite sheet for use an electronic material insulating film. In addition, the resulting separator demonstrates extremely favorable electrical characteristics (in terms of function) such as low internal resistance in separator applications as well as extremely favorable handling ease when the separator is wound to assemble a device. A sheet thickness within the aforementioned range is also effective in terms of reducing weight and size in the case of using the thin sheet of the present invention as a fiber-reinforced plastic. If the thickness is less than 2 $\mu$m, handling becomes difficult in the device assembly process which may make this unsuitable, while also being undesirable from the viewpoint of long-term stability in terms of the occurrence of short-circuiting accompanying deterioration over time. In addition, if the thickness exceeds 22 $\mu$m, it may no longer be possible to expect desirable effects such as lowering of internal resistance.

The basis weight of the fine cellulose fiber layer used in the thin sheet of the present embodiment is preferably 1 g/m$^2$ to 20 g/m$^2$, more preferably 3 g/m$^2$ to 15 g/m$^2$ and even more preferably 4 g/m$^2$ to 13 g/m$^2$. If the basis weight is less than 1 g/m$^2$, handling becomes difficult in the process of assembling into various types of devices, which may make this unsuitable, while also being undesirable from the viewpoint of long-term stability. If the basis weight exceeds 20 g/m$^2$, in addition to being unable to form a thin sheet, pore diameter and porosity of the thin sheet decrease, resin impregnability becomes poor and the basis weight of the insulator in the form of the separator increases, thereby resulting in the risk of being unable to expect desirable effects such as lowering of internal resistance.

The fine cellulose fiber layer containing 50% by weight or more of regenerated fine cellulose fibers used in the thin sheet of the present embodiment may further contain natural fine cellulose fibers at less than 50% by weight in addition to the regenerated fine cellulose fibers. The use of natural fine cellulose fibers allows fine cellulose fibers having a fiber diameter of less than 0.20 $\mu$m to be produced comparatively easily due to the fineness of the constituent units thereof in the form of microfibrils, and enables the strength of the thin sheet to be increased by mixing in narrower natural fine cellulose fibers having a large ratio of fiber length to fiber diameter. As a result of containing less than 50% by weight of natural fine cellulose fibers, the resulting thin sheet has increased strength of the fine cellulose fiber layer and handling during device assembly becomes extremely favorable. The content ratio thereof is more preferably less than 40% by weight and more preferably less than 30% by weight.

The diameter of natural fine cellulose fibers in the fine cellulose fiber layer used in the thin sheet of the present embodiment preferably has a maximum fiber diameter of 15 $\mu$m or less. In the case the maximum fiber diameter is excessively large, this is incompatible with one of the objects of the present invention of attempting to realize reduced thickness by utilizing high uniformity based on the microporous structure resulting from the use of fine fibers as described above, thereby making this undesirable.

Natural fine cellulose fibers having a maximum cellulose fiber diameter not exceeding 15 $\mu$m include fibers obtained by carrying out a high degree of diameter reduction treatment on refined pulp obtained from wood pulp, refined linter or various types of plant species (such as bamboo, hemp fiber, bagasse, kenaf or linter) obtained from deciduous or coniferous trees, as well as never-dried natural fine cellulose fibers in the form of aggregates of fine fibers in the manner of bacterial cellulose (BC) produced by cellulose-producing microorganisms (bacteria).

In addition, the fine cellulose fiber layer containing 50% by weight or more of regenerated fine cellulose fibers used in the thin sheet of the present embodiment may further include fine fibers composed of an organic polymer other than cellulose in addition to the regenerated fine cellulose fibers at preferably less than 50% by weight, more preferably at less than 40% by weight and even more preferably at less than 30% by weight. Any organic polymer can be used for the organic polymer provided it allows the production of fine fibers, and examples thereof include, but are not limited to, aromatic or aliphatic polyester, nylon, polyacrylonitrile, cellulose acetate, polyurethane, polyethylene, polypropylene, polyketone, aromatic polyamide, polyimide and non-cellulose natural organic polymers such as silk or wool. Examples of fine fibers composed of these organic polymers include, but are not limited to, fine fibers that have been highly fibrillated or refined by subjecting to diameter reduction treatment by beating or using a high-pressure homogenizer, and fine fibers obtained by melt blowing using various types of polymers as raw materials. Among these, fine aramid fibers obtained by subjecting polyacrylonitrile nanofibers or wholly aromatic polyamide in the form of aramid fibers to fiber reduction with a high-pressure homogenizer can be used particularly preferably in conjunction with the high heat resistance and high chemical stability of aramid fibers. The maximum fiber diameter of these fine organic polymer fibers is preferably 15 $\mu$m or less. If the maximum fiber diameter is excessively large, this is incompatible with one of the objects of the present invention of attempting to realize reduced thickness by utilizing high uniformity based on the microporous structure resulting from the use of fine fibers as described above, thereby making this undesirable.

Next, an explanation is provided of the method used to produce fine cellulose fibers.

Diameter reduction of cellulose fibers preferably goes through a pretreatment step, beating treatment step and fiber reduction step for both regenerated cellulose fibers and natural cellulose fibers. In the case of reducing the diameter of regenerated cellulose fibers in particular, although the pretreatment step can be carried out with a washing step for removing oily agents, and depending on the case, using a surfactant, in the pretreatment step of natural cellulose fibers, it is effective to put the raw material pulp into a state that facilitates diameter reduction in subsequent steps by subjecting to autoclave treatment by submersing in water at a temperature of 100°C to 150°C, enzyme treatment or a combination thereof. During the pretreatment step, carrying out autoclave treatment by adding an inorganic acid (such as hydrochloric acid, sulfuric acid, phosphoric acid or boric acid) and/or an organic acid (such as acetic acid or citric acid) at a concentration of 1% by weight or less is also effective depending on the case. This pretreatment may be very effective for improving heat resistance of a fine cellulose fiber non-woven fabric since it also has the effect of discharging lignin, hemicellulose and other contaminants present on the surface and in the gaps of microfibrils that compose the cellulose fibers into an aqueous phase, and as a result thereof, enhancing the $\alpha$-cellulose purity of the refined fibers.

Regenerated cellulose fibers and natural cellulose fibers are produced in the manner described below starting in the beating treatment step. In the beating treatment step, the raw material pulp is dispersed in water so that the solid component concentration is 0.5% by weight to 4% by weight, preferably 0.8% by weight to 3% by weight and more preferably 1.0% by weight to 2.5% by weight followed by aggressively promoting fibrillation with a beating device in the manner of a beater or disk refiner (or double disk refiner). In the case of using a disk refiner, if treatment is carried out while setting the clearance between disks to be as narrow as possible (for example, 0.1 mm or less), since beating (fibrillation) proceeds at an extremely high level, the conditions for diameter reduction treatment using a high-pressure homogenizer and the like can be relaxed, which may be effective.

During production of fine cellulose fibers, diameter reduction treatment is preferably carried out following the aforementioned beating treatment with a high-pressure homogenizer, ultra-high-pressure homogenizer or grinder and the like. The solid component concentration in the aqueous dispersion at this time is preferably 0.5% by weight to 4% by weight, more preferably 0.8% by weight to 3% by weight, and more preferably 1.0% by weight to 2.5% by weight in compliance with the aforementioned beating treatment. In the case of a solid component concentration within this range, clogging does not occur and efficient diameter reduction treatment can be achieved.

Examples of the high-pressure homogenizer used include the Model NS High-Pressure Homogenizer manufactured by Niro Soavi S.p.A. (Italy), the Lanier type (Model R) High-Pressure Homogenizer manufactured by SMT Co., Ltd., and the High-Pressure-Type Homogenizer manufactured by Sanwa Engineering Co., Ltd., and devices other than those listed above may also be used provided they perform diameter reduction using nearly the same mechanism as these devices. Ultra-high-pressure homogenizers refer to high pressure impact types of fiber reduction treatment machines such as the Microfluidizer manufactured by Mizuho Industrial Co., Ltd., the Nanomizer manufactured by Yoshida Kikai Co., Ltd., or the Ultimizer manufactured by Sugino Machine Ltd., and devices other than those listed above may also be used provided they perform diameter reduction using nearly the same mechanism as these devices. Although examples of grinder-type diameter reduction devices include stone mortar-type grinders exemplified by the Pure Fan Mill manufactured by Kurita Machinery Mfg. Co., Ltd. and Super Mass Collider manufactured by Masuko Sangyo Co., Ltd., devices other than these devices may also be used provided they perform diameter reduction using nearly the same mechanism as these devices.

The fiber diameter of fine cellulose fibers can be controlled according to the conditions of diameter reduction treatment (such as selection of the device, operating pressure or number of passes) using a high-pressure homogenizer and the like or the pretreatment conditions in the diameter reduction pretreatment step (such as autoclave treatment, enzyme treatment or beating treatment).

Moreover, cellulose-based fine fibers subjected to chemical treatment of the surface thereof or cellulose-based fine fibers in which the hydroxyl group at position 6 has been oxidized to a carboxyl group (including acidic and basic forms) with a TEMPO oxidation catalyst can be used for the natural fine cellulose fibers. In the case of the former, natural fine cellulose fibers can be suitably prepared and used in which all or a portion of the hydroxyl groups present on the surface of the fibers have been esterified, including acetic acid esters, nitric acid esters and sulfuric acid esters, or have been etherified, including alkyl ethers represented by methyl ethers, carboxy ethers represented by carboxymethyl ether, and cyanoethyl ethers. In addition, in the preparation of the latter, namely fine cellulose fibers in which the hydroxyl group at position 6 has been oxidized by a TEMPO oxidation catalyst, a dispersion of fine cellulose fibers can be obtained without necessarily requiring the use of a diameter reduction device requiring a high level of energy in the manner of a high-pressure homogenizer. For example, as is described in the literature (Isogai, A., et al., Biomacromolecules, 7, 1687-1691 (2006)), by combining a catalyst referred to as TEMPO in the manner of a 2,2,6,6-tetramethyl piperidinooxy free radical and an alkyl halide in an aqueous dispersion of natural cellulose followed by adding an oxidizing agent in the manner of hypochlorous acid and allowing the reaction to proceed for a fixed period of time, a dispersion of fine cellulose fibers can be obtained extremely easily by carrying out ordinary mixer treatment following washing or other refining treatment.

Furthermore, in the present embodiment, the formation of fine cellulose fibers may also be effective by mixing prescribed amounts of two or more types of the aforementioned regenerated cellulose or natural cellulose-based fine fibers having different raw materials, natural fine cellulose fibers having different degrees of fibrillation, fine fibers of natural cellulose subjected to chemical treatment of the surface thereof or fine fibers of an organic polymer.

The fine cellulose fiber layer used in the thin sheet of the present embodiment is effective for enhancing strength by containing a reactive crosslinking agent at 10% by weight or less. A reactive crosslinking agent refers to reactant derived from a polyfunctional isocyanate, and is a resin formed by an addition reaction between a polyfunctional isocyanate compound and an active hydrogen-containing compound. As a result of containing the reactive crosslinking agent at 10% by weight or less, strength of the fine cellulose fiber layer increases and the resulting thin sheet demonstrates extremely favorable handling when assembling a device. The reactive crosslinking agent is more preferably contained at 6% by weight or less.

Examples of reactive crosslinking agent polyfunctional isocyanate compounds that form a reactive crosslinking agent in the fine cellulose fiber layer used in the thin sheet of the present embodiment include aromatic polyfunctional isocyanates, araliphatic polyfunctional isocyanates, alicyclic polyfunctional isocyanates and aliphatic polyfunctional isocyanates. Alicyclic polyfunctional isocyanates and aliphatic polyfunctional isocyanates are more preferable from the viewpoint of undergoing little yellowing. In addition, one type or two or more types of polyfunctional isocyanate compounds may be contained.

Examples of aromatic polyfunctional isocyanates include aromatic polyfunctional isocyanates such as 2,4-tolylene diisocyanate, 2,6-tolylene diisocyanate and mixtures thereof (TDI), diphenylmethane-4,4'-diisocyanate (MDI), naphthalene-1,5-diisocyanate, 3,3-dimethyl-4,4-biphenylene diisocyanate, crude TDI, polymethylene polyphenylene diisocyanate, crude MDI, phenylene diisocyanate or xylene diisocyanate.

Examples of alicyclic polyfunctional isocyanates include alicyclic polyfunctional isocyanates such as 1,3-cyclopentane diisocyanate, 1,3-cyclopentene diisocyanate or cyclohexane diisocyanate.

Examples of aliphatic polyfunctional isocyanates include aliphatic polyfunctional isocyanates such as trimethylene diisocyanate, 1,2-propylene diisocyanate, butylene diisocyanate, pentamethylene diisocyanate or hexamethylene diisocyanate.

Examples of active hydrogen-containing compounds include hydroxyl group-containing compounds such as primary alcohols, polyvalent alcohols or phenols, amino group-containing compounds, thiol group-containing compounds and carboxyl group-containing compounds. In addition, water or carbon dioxide contained in air or a reaction field may also be contained. One type of two or more types of active hydrogen-containing compounds may be contained.

Examples of primary alcohols include alcohols having 1 to 20 carbon atoms (such as methanol, ethanol, butanol, octanol, decanol, dodecyl alcohol, myristyl alcohol, cetyl alcohol or stearyl alcohol), alkenols having 2 to 20 carbon atoms (such as oleyl alcohol or linolyl alcohol), and araliphatic alcohols having 7 to 20 carbon atoms (such as benzyl alcohol or naphthyl alcohol).

Examples of polyvalent alcohols include divalent alcohols having 2 to 20 carbon atoms (such as aliphatic diols (including ethylene glycol, propylene glycol, 1,3- or 1,4-butanediol, 1,6-hexanediol, neopentyl alcohol and 1,10-decanediol), alicyclic diols (including cyclohexanediol and cyclohexanedimethanol), or aliphatic diols (including 1,4-bis(hydroxyethyl)benzene)), trivalent alcohols having 3 to 20 carbon atoms (such as glycerin or trimethylolpropane), and tetravalent to octavalent alcohols having 5 to 20 carbon atoms (such as aliphatic polyols (including pentaerythritol, sorbitol, mannitol, sorbitan, diglycerin or dipentaerythritol) or sugars (including sucrose, glucose, mannose, fructose, methyl glucosides and derivatives thereof)).

Examples of phenols include monovalent phenols (such as phenol, 1-hydroxynaphthalene, anthrol or 1-hydroxypyrene) and polyvalent phenols (such as fluoroglucine, pyrogallol, catechol, hydroquinone, bisphenol A, bisphenol F, bisphenol SS, 1,3,6,8-tetrahydroxynaphthalene, 1,4,5,8-tetrahydroxyanthracene, condensates of phenol and formaldehyde (novolac) or the polyphenols described in U.S. Patent No. 3265641).

Examples of amino group-containing compounds include monohydrocarbylamines having 1 to 20 carbon atoms (such as alkyl amines (including butyl amine), benzyl amine or aniline), aliphatic polyamines having 2 to 20 carbon atoms (such as ethylenediamine, hexamethylenediamine or diethylenetriamine), alicyclic polyamines having 6 to 20 carbon atoms (such as diaminocyclohexane, dicyclohexylmethanediamine or isophorone diamine), aromatic polyamines having 2 to 20 carbon atoms (such as phenylenediamine, tolylenediamine or phenylmethanediamine), heterocyclic polyamines having 2 to 20 carbon atoms (such as piperazine or N-aminoethylpiperazine), alkanol amines (such as monoethanolamine, diethanolamine or triethanolamine), polyamide polyamines obtained by condensation of a dicarboxylic acid and an excess of polyamine, polyether polyamines, hydrazines (such as hydrazine or monoalkylhydrazine), dihydrazides (such as succinic dihydrazide or terephthalic dihydrazide), guanidines (such as butyl guanidine or 1-cyanoguanidine) and dicyandiamides.

Examples of thiol group-containing compounds include thiol compounds having 1 to 20 carbon atoms (such as ethyl thiol and other alkyl thiols, phenyl thiol or benzyl thiol), and polyvalent thiol compounds (such as ethylene dithiol or 1,6-hexanedithiol).

Examples of carboxyl group-containing compounds include monovalent carboxylic acid compounds (such as acetic acid and other alkyl carboxylic acids or benzoic acid and other aromatic carboxylic acids) and polyvalent carboxylic acid compounds (such as oxalic acid, malonic acid and other alkyl dicarboxylic acids or terephthalic acid and other aromatic dicarboxylic acids).

The fine cellulose fiber layer used in the thin sheet of the present embodiment may contain a non-woven fabric or base material layer in which the basis weight of one layer of a multilayer structure having 3 layers or less is preferably 3 g/m$^2$ to 20 g/m$^2$ and more preferably 15 g/m$^2$ or less. As a result of containing a non-woven fabric or base material layer having a basis weight of 3 g/m$^2$ to 20 g/m$^2$, even if the strength of the fine cellulose fiber layer of the thin sheet is insufficient, the resulting thin layer sheet has extremely favorable handling when fabricating a member or component while retaining function as a thin sheet since the base material layer compensates for the lack of strength.

The base material layer used in the thin sheet of the present embodiment is a non-woven fabric or paper composed of at least one type of fiber selected from the group consisting of polyamide fibers such as nylon 6 or nylon 6,6, polyester fibers such as polyethylene terephthalate, polytrimethylene terephthalate or polybutylene terephthalate, polyethylene fibers, polypropylene fibers, natural cellulose fibers such as wood pulp or coconut linter, regenerated cellulose fibers such as viscose rayon or cupraammonium rayon, and refined cellulose fibers such as lyocell or tencel. Cellulose, nylon and polypropylene are preferable from the viewpoints of impregnability of electrolyte and compounded resin. In addition, the aforementioned base material layer can be preferably used in the form of a melt-blown or electrospun non-woven fabric based on the sheet thickness range defined in the present invention, and a base material subjected to diameter reduction by calendering treatment can be used more preferably.

An insulating porous layer may be formed on one side or both sides of the thin sheet of the present embodiment. In the case of using the thin sheet as a separator for a power storage device in particular, in the case local generation of heat occurs within the battery caused by an internal short-circuit and the like, the separator contracts in the vicinity of the heat generation site causing the internal short-circuit to spread further and heat generation increases rapidly leading to rupture of the power storage device or other serious problems. By providing a layered structure in which an insulating porous layer is formed on one side or both sides of a thin sheet, a power storage device can be provided that is able to demonstrate a high level of safety by preventing the occurrence and spread of short-circuits.

The insulating porous layer formed on one side or both sides of the laminated thin sheet of the present embodiment is preferably composed of an inorganic filler and heat-curable resin, and the heat-curable resin preferably retains the inorganic filler in gaps without embedding the inorganic filler therein. The inorganic filler is at least one type selected from the group consisting of inorganic oxides and inorganic hydroxides such as calcium carbonate, sodium carbonate, alumina, gibbsite, boehmite, magnesium oxide, magnesium hydroxide, silica, titanium oxide, barium titanate or zirconium oxide, inorganic nitrides such as aluminum nitride or silicon nitride, calcium fluoride, barium fluoride, silicon, aluminum compounds, zeolite, apatite, kaolin, mullite, spinel, olivine, mica and montmorillonite.

Examples of heat-curable resins used in the present embodiment include epoxy-based resins, acrylic-based resins, oxetane-based resins, unsaturated polyester-based resins, alkyd-based resins, novolac-based resins, resol-based resins, urea-based resins and melamine-based resins, and these can be used alone or two or more types can be used in combination. These heat-curable resins are preferable from the viewpoints of handling ease and safety. A dispersant, emulsifier or organic solvent and the like may also be contained in an aqueous dispersion. Examples of epoxy-based resins include copolymers of glycidyl acrylate, acrylic acid, methyl methacrylate, methacrylic acid, butyl methacrylate and styrene. Examples of acrylic-based resins include copolymers of methyl methacrylate, butyl acrylate, methacrylic acid, hydroxyethyl methacrylate and styrene.

The insulating porous layer formed on one side or both sides of the thin sheet of the present embodiment is fabricated by contacting a mixed slurry of inorganic filler and heat-curable resin with a non-woven fabric base material and allowing to dry followed by adhering to the fine cellulose fiber layer. A thickener, antifoaming agent or organic solvent may also be added to the mixed slurry as necessary.

The basis weight of the insulating porous layer formed on one side or both sides of the laminated thin sheet of the present embodiment is preferably 2 g/m$^2$ to 10 g/m$^2$. Pinholes may form in the case the basis weight is less than 2 g/m$^2$, while on the other hand, if the basis weight exceeds 10 g/m$^2$, the insulating layer may become excessively thick resulting in an increase in internal resistance, fragmentation of the inorganic filler during bending processing or separation. The content ratio of inorganic filler in the laminated thin sheet is preferably 15.0% by weight to 50.0% by weight. The solid component concentration of the heat-curable resin in the separator is more preferably 1.0% by weight to 15.0% by weight. Pinholes may form if the content ratio of inorganic filler is less than 10.0% by weight and the content ratio of the solid component of the heat-curable resin exceeds 20.0% by weight. If the content ratio of inorganic filler exceeds 70.0% by weight and the content ratio of the solid component of the heat-curable filler is less than 0.1% by weight, fragmentation of the inorganic filler and separation may occur.

Moreover, an indicator of metal ion content in the form of chlorine ion concentration in the thin sheet of the present embodiment is preferably 40 ppm or less depending on the application. This is because, if the chlorine ion concentration is 40 ppm or less, this means that Na, Ca or other metal ions are also contained at a relatively low concentration, and as a result thereof, inhibition of heat resistance of the separator and electrical characteristics of a power storage device in which the separator is incorporated can be inhibited. If chlorine ion concentration is more preferably 30 ppm or less and most preferably 25 ppm or less, heat resistance is demonstrated more preferably. Chlorine ion concentration can be evaluated by ion chromatography.

Although the thin sheet of the present embodiment is mainly produced by depositing a dispersion, in which regenerated fine cellulose fibers are highly dispersed in an aqueous medium such as water, by a papermaking method or a coating method, the dispersion is preferably deposited by a papermaking method from the viewpoint of the efficiency of the deposition method in terms of, for example, the burden placed on production in the drying step. Conventionally, in order to produce a highly porous thin sheet from fine cellulose fibers in the manner of the present invention, it was necessary to either replace the water in the wet paper web formed by papermaking in order to suppress fusion and aggregation between fibers during drying with an organic solvent, or use a dispersion containing an organic solvent as a coating liquid (see, for example, Japanese Patent No. 4753874). In the present embodiment, however, as a result of containing a prescribed amount of regenerated fine cellulose fibers having a specific surface area equivalent fiber diameter of 0.20 $\mu$m to 2.0 $\mu$m, it was found to be possible to retain pores required for use as a thin sheet during drying by a papermaking method or coating method without using an organic solvent. Here, regenerated fine cellulose fibers having a specific surface area equivalent fiber diameter of 0.20 $\mu$m to 2.0 $\mu$m refer to regenerated fine cellulose fibers having a specific surface area equivalent fiber diameter of 0.20 $\mu$m to 2.0 $\mu$m as determined by carrying out papermaking on a single layer (basis weight: 10 g/m²) from an aqueous dispersion containing only the regenerated fine cellulose fibers followed by calculating specific surface area equivalent fiber diameter according to the previously indicated equation based on the result of measuring specific surface area of the resulting single layer sheet according to the BET method at the time of deposition. The specific surface area equivalent fiber diameter is preferably 0.25 $\mu$m or more. In addition, the specific surface area equivalent fiber diameter is preferably 1.0 $\mu$m or less, more preferably 0.45 $\mu$m or less and most preferably 0.40 $\mu$m or less. If the specific surface area equivalent fiber diameter is smaller than 0.20 $\mu$m, it become difficult to retain pores suitable for the thin sheet of the present invention when drying the aqueous wet paper web, while if the specific surface area equivalent fiber diameter is larger than 2.0 $\mu$m, there is susceptibility to the occurrence of the problem of it not being possible realize both reduced thickness and uniformity.

In the case of producing the thin sheet of the present embodiment, the dispersion method used when highly dispersing the fine cellulose fibers in the aqueous dispersion for papermaking or coating is important, and the selection thereof has a considerable effect on the thickness and uniformity of the thin sheet to be subsequently described.

The dispersion containing regenerated fine cellulose fibers obtained by fibrillation treatment or diameter reduction treatment according to the aforementioned production method can be used as is or after diluting with water followed by dispersing with a suitable dispersion treatment to obtain a dispersion for papermaking or coating in order to prepare the separator of the present embodiment. Although components other than the regenerated fine cellulose fibers, such as natural fine cellulose fibers, fine fibers composed of an organic polymer other than cellulose or reactive crosslinking agent, may be mixed according to the timing of each step during production of the aforementioned dispersion, they may be preferably added at the stage of producing the dispersion for papermaking or coating. Each component is mixed in followed by dispersing with a suitable dispersion treatment to obtain a dispersion for papermaking or coating. With respect to the timing at which fine fibers other than regenerated fine cellulose fibers are mixed in particular, these fine fibers may be mixed with regenerated cellulose raw materials (cut yarn) and beaten in the beating step starting from the stage of pulp or cut yarn, or raw materials that have undergone beating treatment may be mixed in the step in which diameter reduction treatment is carried out with a high-pressure homogenizer and the like. Although any dispersion method may be used, dilution treatment after diluting the dispersion for papermaking or coating or after mixing the raw materials is suitably selected corresponding to the type of raw materials mixed. Examples thereof include, but are not limited to, a disperser-type stirrer, various types of homomixers and various types of line mixers.

The following provides a description of a deposition method mainly using the papermaking method.

The papermaking method can naturally be carried out using a batch-type papermaking machine as well as using all types of continuous papermaking machines capable of industrial use. The composite sheet material of the present embodiment can be particularly preferably produced by an inclined wire-type papermaking machine, Fourdrinier-type papermaking machine or cylinder-type papermaking machine. Carrying out multistage papermaking using one or two or more machines (such as using an inclined wire-type papermaking machine for producing the lower layer and using a cylinder-type papermaking machine for producing the upper layer) may be effective for enhancing sheet quality uniformity depending on the case. Multistage papermaking refers to a technology consisting of, for example, carrying out the first stage of papermaking at a basis weight of 5 g/m² and carrying out the second stage of papermaking on the resulting wet paper web at a basis weight of 5 g/m² to obtain the composite sheet material of the present invention having a total basis weight of 10 g/m². In the case of multistage papermaking, although a single layer of the composite sheet material of the present invention is obtained in the case of depositing the upper layer and lower layer from the same dispersion, a layer of wet paper web having a fine network can be formed as the lower layer in the first stage using fibrillated fibers, for example, after which papermaking using the aforementioned dispersion can be carried out thereon in the second stage to allow the wet paper web of the lower layer to function as a filter to be subsequently described.

Since the thin sheet of the present embodiment uses fine fibers, a filter cloth or plastic wire mesh having a fine structure that prevents the fine fibers from escaping during papermaking is preferably used when depositing according to the papermaking method. The selection of a filter cloth or plastic wire mesh in which solid components in the papermaking dispersion basically remain in the wet paper, or in other words, such that the yield of solid components in the papermaking step is 90% by weight or more, preferably 95% by weight or more and more preferably 99% by weight or more, for this filter cloth or plastic wire mesh having a fine structure enables industrially preferable production. A high yield means that there is low penetration into the filter, which is preferable from the viewpoint of ease of separation following papermaking and deposition. In addition, although the use of a narrower mesh size for the filter is preferable since it improves the aforementioned yield, if freeness becomes poor as a result thereof, the production rate of the wet paper decreases, thereby making this undesirable. Namely, if the water permeability of the wire mesh or filter cloth at a temperature of 25°C and atmospheric pressure is preferably 0.005 ml/cm$^2$·s more and more preferably 0.01 ml/cm$^2$·s or more, papermaking can be carried out preferably from the viewpoint of productivity. In actuality, it is preferable to select a filter cloth or plastic wire mesh that has a high solid component yield and favorable freeness. Although there are no particular limitations on the filter cloth or plastic wire mesh that satisfies the aforementioned conditions, examples thereof include, but are not limited to, Tetex Mono DLWO7-8435-SK010 (made of PET) manufactured by Sefar AG (Switzerland), NT20 filter cloth (PET/nylon blend) manufactured by Shikishima Canvass Co., Ltd., LTT-9FE plastic wire mesh manufactured by Nippon Filcon Co., Ltd., and the multilayer wire mesh described in Japanese Unexamined Patent Publication No. 2011-42903.

Wet paper having a cellulose fiber solid content of 4% by weight or more can be produced by depositing a papermaking dispersion prepared so that the concentration of fine cellulose fibers is preferably 0.01% by weight to 0.5% by weight and more preferably 0.05% by weight to 0.3% by weight on a filter cloth that satisfies the aforementioned conditions by filtering while activating suction and the like. The solid content at this time is preferably as high as possible, and is preferably 8% by weight or more and more preferably 12% by weight or more. Subjecting this wet paper to pressing treatment makes it possible to highly remove dispersion medium present in the papermaking dispersion and enhance the solid content in the resulting wet paper, thereby making it possible to obtain a wet paper of higher strength. Subsequently, drying treatment is carried out with drying equipment such as a drum dryer followed by winding up in the form of a thin sheet. Although drying is normally carried out at atmospheric pressure using a drum dryer or pin tenter-type hot air drying chamber, drying may also be carried out under pressure or in a vacuum depending on the case. At this time, drying is more preferably carried out with a drum dryer capable of effectively allowing a fixed length of the wet paper to be dried for the purpose of ensuring uniformity of physical properties and suppressing contraction in the direction of width. The drying temperature is suitably selected to be within the range of 60°C to 150°C. Multistage drying consisting of preliminarily drying at a low temperature of 60°C to 80°C to impart freedom to the wet paper followed by employing a final drying step at a temperature of 100°C or higher may also be effective depending on the case.

Continuously carrying out the aforementioned papermaking step, drying step, and depending on the case, a smoothing step by calendering treatment, may be effective for continuously forming the thin sheet of the present embodiment. Carrying out smoothing treatment using a calendering device makes it possible to reduce thickness as previously described and enable the thin sheet of the present invention to be provided that combines a wide range of sheet thickness, air impermeability and strength. In addition to using an ordinary calendering device employing a single pressing roller for the calendering device, a super calendering device may also be used that has a structure in which these devices are installed in multiple stages. By selecting these devices along with each of the materials (material hardness) and linear pressure on both sides of the roller during calendering treatment corresponding to the objective, the thin sheet of the present invention can be obtained having a proper balance of various physical properties.

In addition, in the aforementioned sheet deposition process using papermaking, all steps may be carried out with a single wire by using a filter cloth or plastic wire mesh having endless specifications for the papermaking method used, the filter cloth or plastic wire mesh may be carried or transferred at an intermediate point by picking up and placing on an endless filter or endless felt of the next step, or a roll-to-roll step using a filter cloth may be adopted. The method used to produce the separator of the present embodiment is naturally not limited thereto.

The following provides an explanation of compounding the thin sheet (A) of the present embodiment with a resin (B) .

In order to design a fine cellulose fiber layer containing 50% by weight or more of regenerated fine cellulose fibers to have a specific surface area equivalent fiber diameter of 0.20 μm to 2.0 μm, porosity and pore diameter can be retained by preventing drying and contraction attributable to cellulose hydroxyl groups during sheet formation despite having the characteristic of nanofibers in the form of a large number of compounding points per unit volume. As a result of being able to retain pore diameter, resin is able to easily impregnate the fine cellulose fiber layer, thereby making it possible to compound the fine cellulose fiber layer and resin.

Examples of resins capable of impregnating the regenerated fine cellulose fiber layer include heat-curable resins, photocurable resins, resins obtained by heat-curing or photo-curing these resins, and thermoplastic resins.

Examples of heat-curable resins capable of impregnating the regenerated fine cellulose fiber layer include epoxy-based resins, acrylic-based resins, oxetane-based resins, unsaturated polyester-based resins, alkyd-based resins, novolac-based resins, resol-based resins, urea-based resins and melamine-based resins, and these can be used alone or two or more types can be used in combination.

A heat-curable compound suitable for the respective objective thereof is preferably added for the purpose of providing a heat-curable resin composition having superior characteristics for improving refractive index, improving curability, improving adhesiveness, improving flexibility of cured molded products and improving handling by reducing the viscosity of the heat-curable resin composition. In the case of these uses, these compounds may be used alone or two or more types may be used in combination. The added amount of the heat-curable compound is preferably 10 parts by weight to 1,000 parts by weight and more preferably 50 parts by weight to 500 parts by weight based on 100 parts by weight of the regenerated fine cellulose fiber layer. If the added amount is 10 parts by weight or more, the heat-curable compound is effective for demonstrating thermal stability in terms of reducing the coefficient of linear thermal expansion and retaining elasticity at high temperatures), while if the added amount is 1,000 parts by weight or less, high permeability and high heat resistance of the heat-curable resin composition and cured molded products can be maintained.

Epoxy compounds able to be added as heat-curable resins consist of, for example, epoxy compounds containing an aromatic group that demonstrate thermal stability at high temperatures. Examples include glycidyl ether-type epoxy resins having two or more functional groups. Examples thereof include glycidyl ether-type epoxy resins obtained by reacting epichlorhydrin with bisphenol A, bisphenol F, bisphenol AD, bisphenol S, tetrafluorobisphenol A, phenol novolac, cresol novolac, hydroquinone, resorcinol, 4,4'-dihydroxy-3,3',5,5'-tetramethylbiphenyl, 1,6-dihydroxynaphthalene, 9,9-bis(4-hydroxyphenyl)fluorene, tris(p-hydroxyphenyl)methane or tetrakis(p-hydroxyphenyl)ethane. In addition, other examples include epoxy resins having a dicyclopentadiene backbone, epoxy resins having a biphenylaralkyl backbone and triglycidyl isocyanurate. In addition, an aliphatic epoxy resin or alicyclic epoxy resin can also be incorporated within a range that does not cause a significant decrease in Tg.

A curing agent in the form of a liquid aromatic diamine curing agent is preferably added in addition to the epoxy compound able to be added as a heat-curable resin. Here, a liquid refers to being a liquid under conditions of pressure of 0.1 MPa and temperature of 25°C. In addition, an aromatic diamine curing agent refers to a compound having two aminic nitrogen atoms bound to the aromatic ring and a plurality of active hydrogens in a molecule thereof. In addition, "active hydrogens" refer to hydrogen atoms bound to the aminic nitrogen atoms. It is essential for the curing agent to be in liquid form in order to ensure impregnability into the reinforcing fibers, and is required to be an aromatic diamine curing agent in order to obtain a cured product having a high Tg. Examples thereof include liquid aromatic diamine curing agents such as 4,4'-methylenebis(2-ethylaniline), 4,4'-methylenebis(2-isopropylaniline), 4,4'-methylenebis(N-methylaniline), 4,4'-methylenebis(N-ethylaniline), 4,4'-methylenebis(N-sec-butylaniline), N,N'-dimethyl-p-phenylenediamine, N,N'-diethyl-p-phenylenediamine, N,N'-di-sec-butyl-p-phenylenediamine, 2,4-diethyl-1,3-phenylenediamine, 4,6-diethyl-1,3-phenylenediamine or 2,4-diethyl-6-methyl-1,3-phenylenediamine. These liquid aromatic diamine curing agents may be used alone or a plurality thereof may be used after mixing.

Moreover, a latent curing agent may be added as a substance able to be added in addition to the epoxy compound as a resin having heat curability of the present invention. A latent curing agent refers to a compound in the form of a solid that is insoluble in epoxy resin at room temperature and functions as a curing accelerator as a result of being solubilized by heat, and examples thereof include imidazole compounds that are a solid at room temperature and solid dispersed types of amino adduct-based latent curing accelerators such as the reaction products of amine compounds and epoxy compounds (amino-epoxy adduct-based latent curing accelerators) or the reaction products of amine compounds and isocyanate compounds or urea compounds (urea-type adduct-based latent curing accelerators).

Examples of imidazole compounds that are a solid at room temperature include, but are not limited to, 2-heptadecylimidazole, 2-phenyl-4,5-dihydroxymethylimidazole, 2-undecylimidazole, 2-phenyl-4-methyl-5-hydroxymethylimidazole, 2-phenyl-4-benzyl-5-hydroxymethyimidazole, 2,4-diamino-6-(2-methylimidazolyl(1))-ethyl-S-triazine, 2,4-diamino-6-(2'-methylimidazolyl(1))-ethyl-S-triazine-isocyanuryl acid adduct, 2-methylimidazole, 2-phenylimidazole, 2-phenyl-4-methylimidazole, 1-cyanoethyl-2-phenylimidazole, 1-cyanoethyl-2-methylimidazole trimellitate, 1-cyanoethyl-2-phenylimidazole trimellitate, N-(2-methylimidazolyl-1-ethyl) urea and N,N'-(2-methylimidazolyl(1))-ethyl) adipoyl diamide.

Examples of epoxy resins used as one of the production raw materials of solid dispersed types of amino adduct-based latent curing accelerators (amine-epoxy adduct-based latent curing accelerators) include, but are not limited to, glycidyl ether esters obtained by reacting epichlorhydrin with a polyvalent phenol such as bisphenol A, bisphenol F, catechol or resorcinol, a polyvalent alcohol in the manner of glycerin or polyethylene glycol, or a carboxylic acid in the manner of terephthalic acid, glycidyl amine compounds obtained by reacting epichlorhydrin with 4,4'-diaminodiphenylmethane or m-aminophenol, polyfunctional epoxy compounds such as epoxidated phenol novolac resin, epoxidated cresol novolac resin or epoxidated polyolefin, and monofunctional epoxy compounds such as butyl glycidyl ether, phenyl glycidyl ether or glycidyl methacrylate.

Amine compounds used as another production raw material of the aforementioned solid dispersed types of amino adduct-based latent curing accelerators are compounds having one or more active hydrogens capable of undergoing an addition reaction with an epoxy group in a molecule thereof and having at least one functional group selected from a primary amino group, secondary amino group and tertiary amino group in a molecule thereof. Examples of these amine compounds include, but are not limited to, aliphatic amines in the manner of diethylenetriamine, triethylenetetraamine, n-propylamine, 2-hydroxyethylaminopropylamine, cyclohexylamine or 4,4'-diamino-dicyclohexylmethane, aromatic amine compounds such as 4,4'-diaminodiphenylmethane or 2-methylaniline, and heterocyclic compounds containing a nitrogen atom such as 2-ethyl-4-methylimidazole, 2-ethyl-4-methylimidazoline, 2,4-dimethylmidazoline, piperidine or piperazine.

Moreover, a photoacid generator may be added as a substance able to be added in addition to the epoxy compound added as a resin having heat curability of the present invention. A substance that generates an acid and is able to be cationically polymerized by irradiating with ultraviolet light is used as a photoacid generator. Examples of photoacid generators include onium salts composed of a cationic component and an anionic component such as $SbF_8^-$, $PF_6^-$, $BF_4^-$, $AsF_6^-$, $(C_6F_5)_4^-$ or $PF_4(CF_2CF_3)_2^-$ (such as diazonium salts, sulfonium salts, iodonium salts, selenium salts, pyridinium salts, ferrocenium salts or phosphonium salts). These may be used alone or two or more types may be used in combination. More specifically, aromatic sulfonium salts, aromatic iodonium salts, aromatic phosphonium salts or aromatic sulfoxonium salts and the like can be used. Among these, photoacid generators having a hexafluorophosphate or hexafluoroantimonate as an anionic component thereof are preferable from the viewpoints of photocurability and transparency.

The content of photoacid generator is required to be set within the range of 0.5 parts by weight to 2.0 parts by weight based on 100 parts by weight of the total amount of epoxy compounds. The content of photoacid generator is more preferably within the range of 0.5 parts by weight to 1.5 parts by weight. If the content of photoacid generator is excessively low, there is the risk of poor curability or a decrease in heat resistance, while if the content is excessively high, transparency may be impaired despite improvement of curability.

In addition to the aforementioned components, other additives can be suitably incorporated as necessary as substances able to be added in addition to the epoxy compound added as a resin having heat curability of the present invention. For example, an acid sensitizer or a photosensitizer such as anthracene can be incorporated as necessary for the purpose of enhancing curability. In addition, a silane-based or titanium-based coupling agent may be added to enhance adhesiveness with a base material in applications in which a cured product is formed on a base material such as glass. Moreover, an antioxidant or antifoaming agent can also be suitable incorporated. These additives may be used alone or two or more types may be used in combination. These additives are preferably used within the range of 5% by weight or less based on the total weight of the curable resin composition from the viewpoint of not inhibiting the effects of the present invention.

Examples of resins having photocurability that are able to impregnate the regenerated fine cellulose fiber layer include compounds having one or two or more (meth)acryloyl groups in a molecule thereof.

A compound having one or two or more (meth)acryloyl groups in a molecule thereof suitable for the respective objective thereof is preferably added for the purpose of providing a photosensitive resin composition having superior characteristics for improving refractive index, improving curability, improving adhesiveness, improving flexibility of cured molded products and improving handling by reducing the viscosity of the photosensitive resin composition. In the case of these uses, these compounds may be used alone or two or more types may be used in combination. The added amount of a compound having one or two or more (meth)acryloyl groups in a molecule thereof is preferably 10 parts by weight to 1,000 parts by weight and more preferably 50 parts by weight to 500 parts by weight based on 100 parts by weight of the regenerated fine cellulose fiber layer. If the added amount is 10 parts by weight or more, this compound is effective for demonstrating thermal stability in terms of reducing the coefficient of linear thermal expansion and retaining elasticity at high temperatures), while if the added amount is 1,000 parts by weight or less, high permeability and high heat resistance of the photosensitive resin composition and cured molded products can be maintained.

(Meth)acrylate compounds capable of being added as a photocurable resin consist of, for example, (meth)acrylate compounds containing an aromatic group having thermal stability at high temperatures. Preferable examples thereof include phenoxyethyl acrylate, para-phenylphenoxyethyl acrylate (Aronix TO-1463 manufactured by Toagosei Co., Ltd.), para-phenylphenyl acrylate, (Aronix TO-2344 manufactured by Toagosei Co., Ltd.), phenyl glycidyl ether acrylate (to be referred to as "PGEA"), benzyl (meth)acrylate, phenoxydiethylene glycol (meth)acrylate, phenol (meth)acrylate modified with 3 to 15 moles of ethylene oxide, cresol (meth)acrylate modified with 1 to 15 moles of ethylene oxide, nonylphenyl (meth)acrylate modified with 1 to 20 moles of ethylene oxide, nonylphenol (meth)acrylate modified with 1 to 15 moles of propylene oxide, bisphenol A di(meth)acrylate modified with 1 to 30 moles of ethylene oxide, bisphenol A di(meth)acrylate modified with 1 to 30 moles of propylene oxide, bisphenol F di(meth)acrylate modified with 1 to 30 moles of ethylene oxide and bisphenol F di(meth)acrylate modified with 1 to 30 moles of propylene oxide. In using these compounds, these compounds may be used alone or two or more types may be used as a mixture.

The addition of a photopolymerization initiator to the photocurable resin is important for the purpose of imparting photosensitive pattern formation.

Examples of a photopolymerization initiator (C) include the photopolymerization initiators indicated in the following (1) to (10):

(1) benzophenone derivatives: benzophenone, methyl o-benzoyl benzoate, 4-benzoyl-4'-methyl diphenyl ketone, dibenzyl ketone and fluorenone;
(2) acetophenone derivatives: 2,2'-diethoxyacetophenone, 2-hydroxy-2-methylpropiophenone, 2,2-dimethoxy-1,2-diphenyletha-1-one (Irgacure 651 manufactured by BASF SE), 1-hydroxycyclohexyl phenyl ketone (Irgacure 184 manufactured by BASF SE), 2-methyl-1-[4-(methylthio)phenyl]-2-morpholinopropan-1-one (Irgacure 907 manufactured by BASF SE), 2-hydroxy-1-{4-[4-(2-hydroxy-2-methylpropionyl)-benzyl]-phenyl}-2-methylpropan-1-one (Irgacure 127 manufactured by BASF SE) and methyl phenylglyoxylate;

(3) thioxanthone derivatives: thioxanthone, 2-methylthioxanthone, 2-isopropylthioxanthone and diethylthioxanthone;

(4) benzyl derivatives: benzyl, benzyl dimethyl ketal and benzyl β-methoxyethyl acetal;

(5) benzoin derivatives: benzoin, benzoin methyl ether and 2-hydroxy-2-methyl-1-phenylpropan-1-one (Darocure 1173 manufactured by BASF SE);

(6) oxime derivatives: 1-phenyl-1,2-butanedione-2-(O-methoxycarbonyl)oxime, 1-phenyl-1,2-propanedione-2-(O-methoxycarbonyl)oxime, 1-phenyl-1,2-propanedione-2-(O-ethoxycarbonyl)oxime, 1-phenyl-1,2-propanedione-2-(O-benzoyl)oxime, 1,3-diphenylpropanedione-2-(O-ethoxycarbonyl)oxime, 1-phenyl-3-ethoxypropanetrione-2-(O-benzoyl)oxime, 1,2-octanedione, 1-[4-(phenylthio)-2-(O-benzoyloxime)] (OXE01 manufactured by BASF SE), ethanone, and 1-[9-ethyl-6-(2-methylbenzoyl)-9H-carbazol-3-yl]-1-(O-acetyloxime) (OXE02 manufactured by BASF SE);

(7) α-hydroxyketone-based compounds: 2-hydroxy-2-methyl-1-phenylpropan-1-one, 1-[4-(2-hydroxyethoxy)phenyl]2-hydroxy-2-methyl-1-propan-1-one and 2-hydroxy-1-{4-[4-(2-hydroxy-2-methylpropionyl)-benzyl]phenyl}-2-methylpropane;

(8) α-aminoalkylphenone-based compounds: 2-benzyl-2-dimethylamino-1-(4-morpholinophenyl)-butan-1-one (Irgacure 369 manufactured by BASF SE) and 2-dimethylamino-2-(4-methylbenzyl)-1-(4-morpholin-4-yl-phenyl)butan-1-one (Irgacure 379 manufactured by BASF SE);

(9) phosphine oxide-based compounds: bis(2,4,6-trimethylbenzoyl)-phenylphosphine oxide (Irgacure 819 manufactured by BASF SE), bis(2,6-dimethoxybenzoyl)-2,4,4,-trimethyl-pentylphosphine oxide and 2,4,6-trimethylbenzoyl-diphenylphosphine oxide (Lucirin TPO manufactured by BASF SE); and,

(10) titanocene compounds: bis(η5-2,4-cyclopentadien-1-yl)-bis (2, 6-difluoro-3-(1H-pyrrol-1-yl)phenyl) titanium (Irgacure 784 manufactured by BASF SE).

Each of the photopolymerization initiators of (1) to (10) above may be used alone or two or more types may be used in combination.

The content of photopolymerization initiator based on the weight of all components other than solvent in the photosensitive resin composition is preferably 0.01% by weight or more and more preferably 0.1% by weight or more from the viewpoint of obtaining adequate sensitivity, and preferably 15% by weight or less and more preferably 10% by weight or less from the viewpoint of adequately curing the component at the bottom of the photosensitive resin layer.

A photosensitizer for improving photosensitivity can be added to the photocurable resin as desired. Examples of such photosensitizers include Michler's ketone, 4,4'-bis(diethylamino)benzophenone, 2,5-bis(4'-diethylaminobenzylidene)cyclopentanone, 2,6-bis(4'-diethylaminobenzylidene)cyclohexanone, 2,6-bis(4'-dimethylaminobenzylidene)-4-methylcyclohexanone, 2,6-bis(4'-diethylaminobenzylidene)-4-methylcyclohexanone, 4,4'-bis(dimethylamino)chalcone, 4,4'-bis(diethylamino)chalcone, 2-(4'-dimethylaminocinnamylidene)indanone, 2-(4'-dimethylaminobenzylidene)indanone, 2-(p-4'-dimethylaminobiphenyl)benzothiazole, 1,3-bis(4-dimethyaminobenzylidene)acetone, 1,3-bis(4-diethylaminobenzylidene)acetone, 3,3'-carbonyl-bis(7-diethylaminocoumarin), 3-acetyl-7-dimethylaminocoumarin, 3-ethoxycarbonyl-7-diemethylaminocoumarin, 3-benzyloxycarbonyl-7-dimethylaminocoumarin, 3-methoxycarbonyl-7-diethylaminocoumarin, 3-ethoxycarbonyl-7-diethylaminocoumarin, N-phenyl-N-ethylethanolamine, N-phenyldiethanolamine, N-p-tolyldiethanolamine, N-phenylethanolamine, N,N-bis(2-hydroxyethyl)aniline, 4-morpholinobenzophenone, isoamyl 4-dimethylaminobenzoate, isoamyl 4-diethylaminobenzoate, benzothiazole, 2-mercaptobenzoimidazole, 1-phenyl-5-mercapto-1,2,3,4-tetrazole, 1-cyclohexyl-5-mercapto-1,2,3,4-tetrazole, (1-tert-butyl)-5-mercapto-1,2,3,4-tetrazole, 2-mercaptobenzothiazole, 2-(p-dimethylaminostyryl)benzoxazole, 2-(p-dimethylaminostyryl)benzothiazole, 2-(p-dimethylaminostyryl)naphtho(1,2-p)thiazole and 2-(p-dimethylaminobenzyl)styrene. In addition, in using these photosensitizers, these photosensitizers may be used alone or two or more types may be used as a mixture.

A polymerization inhibitor can be added to the photocurable resin composition as desired for the purpose of improving viscosity during storage and stability of photosensitivity. Examples of such polymerization inhibitors that can be used include hydroquinone, N-nitrosodiphenylamine, p-tert-butylcatechol, phenothiazine, N-phenylnaphthylamine, ethylenediamine tetraacetate, 1,2-cyclohexanediamine tetraacetate, glycol ether diamine tetraacetate, 2,6-di-tert-butyl-p-methylphenol, 5-nitroso-8-hydroxyquinoline, 1-nitroso-2-naphthol, 2-nitroso-1-naphthol, 2-nitroso-5-(N-ethyl-N-sulfapropylamino)phenol, N-nitroso-N-phenylhydroxyamine ammonium salt, N-nitroso-N-phenylhydroxylamine ammonium salt, N-nitroso-N-(1-naphthyl)hydroxylamine ammonium salt and bis(4-hydroxy-3,5-di-tert-butyl)phenylmethane.

In addition to the polymerization inhibitors listed above, various additives such as ultraviolet absorbers or coating film smoothness-imparting agents can be suitably incorporated in the photocurable resin composition provided they do not inhibit the various characteristics of the photocurable resin composition.

Although a heat-curable resin or photocurable resin can be used for the resin capable of impregnating the regenerated fine cellulose fiber layer, a thermoplastic resin is used preferably in terms of enabling the formation of a volume-produced product and the like by impregnating the resin into a sheet-like base material and the like in a short period of time by injection molding, and in terms of being able to easily accommodate various molded shapes. Although there are no particular limitations thereon, examples of thermoplastic resins include polyolefins in the manner of general-purpose plastics (such as polyethylene or polypropylene), ABS, polyamides, polyesters, polyphenylene ethers, polyacetals, polycarbonates, polyphenylene sulfides, polyimides, polyether imides, polyether sulfones, polyketones, polyether ether ketones and combinations thereof.

Inorganic fine particles may also be added to the resin impregnated into the regenerated fine cellulose fiber layer from the viewpoint of improving thermal stability of the resin (in terms of coefficient of linear thermal expansion and retention of elasticity at high temperatures). Examples of inorganic fine particles having superior heat resistance include alumina, magnesia, titania, zirconia and silica (such as quartz, fumed silica, precipitated silica, silicic anhydride, molten silica, crystalline silica or amorphous silica ultrafine powder), examples of inorganic fine particles having superior thermal conductivity include boron nitride, aluminum nitride, aluminum oxide, titanium oxide, magnesium oxide, zinc oxide and silicon oxide, examples of inorganic fine particles having superior electrical conductivity include metal fillers and/or metal-coated fillers using a single metal or alloy (such as iron, copper, magnesium, aluminum, gold, silver, platinum, zinc, manganese or stainless steel), examples of inorganic fine particles having superior barrier properties include minerals such as mica, clay, kaolin, talc, zeolite, wollastonite or smectite, as well as potassium titanate, magnesium sulfate, sepiolite, zonolite, aluminum borate, calcium oxide, titanium oxide, barium sulfate, zinc oxide and magnesium hydroxide, examples of inorganic fine particles having a high refractive index include barium titanate, zirconium oxide and titanium oxide, examples of inorganic fine particles demonstrating photocatalytic activity include photocatalytic metals such as titanium, cerium, zinc, copper, aluminum, tin, indium, phosphorous, carbon, sulfur, tellurium, nickel, iron, cobalt, silver, molybdenum, strontium, chromium, barium or lead, composites of the aforementioned metals and oxides thereof, examples of inorganic fine particles having superior impact resistance include metals such as silica, alumina, zirconia or magnesium, composites thereof and oxides thereof, examples of inorganic fine particles having superior electrical conductivity include metals such as silver or copper, tin oxide and indium oxide, examples of inorganic fine particles having superior insulating properties include silica, and examples of inorganic fine particles having superior ultraviolet shielding include titanium oxide and zinc oxide. These inorganic fine particles may be opportunely selected according to the application, and may be used alone or a plurality of types thereof may be used in combination. In addition, since the aforementioned inorganic fine particles also have various properties other than the properties listed above, they may be selected opportunely according to the application.

For example, in the case of using silica for the inorganic fine particles, known silica fine particles such as powdered silica or colloidal silica can be used without any particular limitations. Examples of commercially available powdered silica fine particles include Aerosil 50 or 200 manufactured by Nippon Aerosil Co., Ltd., Sildex H31, H32, H51, H52, H121 or H122 manufactured by Asahi Glass Co., Ltd., E220A or E220 manufactured by Nippon Silica Ind. Co., Ltd., Sylysia 470 manufactured by Fuji Silysia Chemical Ltd., and SG Flake manufactured by Nippon Sheet Glass Co., Ltd. In addition, examples of commercially available colloidal silica include Methanol Silica Sol IPA-ST, PGM-ST, NBA-ST, XBA-ST, DMAC-ST, ST-UP, ST-OUP, ST-20, ST-40, ST-C, ST-N, ST-O, ST-50 or ST-OL manufactured by Nissan Chemical Industries, Ltd.

Surface-modified silica may also be used, and examples thereof include the aforementioned silica fine particles subjected to surface treatment with a reactive silane coupling agent having a hydrophobic group, and those modified with a compound having a (meth)acryloyl group. Examples of commercially available powdered silica modified with a compound having a (meth)acryloyl group include Aerosil RM50, R7200 or R711 manufactured by Nippon Aerosil Co., Ltd., examples of commercially available colloidal silica modified with a compound having a (meth)acryloyl group include MIBK-SD or MEK-SD manufactured by Nissan Chemical Industries, Ltd., and examples of commercially available colloidal silica subjected to surface treatment with a reactive silane coupling agent having a hydrophobic group include MIBK-ST or MEK-ST manufactured by Nissan Chemical Industries, Ltd.

There are no particular limitations on the shape of the aforementioned silica fine particles, and those having a spherical, hollow, porous, rod-like, plate-like, fibrous or irregular shape can be used. Examples of commercially available hollow silica fine particles that can be used include Silinax particles manufactured by Nittetsu Mining Co., Ltd.

The primary particle diameter of the inorganic fine particles is preferably within the range of 5 nm to 2,000 nm. If the primary particle diameter is 5 nm or more, the inorganic fine particles are favorably dispersed in a dispersion, and if the primary particle diameter is within 2,000 nm, the resulting cured product has favorable strength. The primary particle diameter is more preferably 10 nm to 1,000 nm. Furthermore, "particle diameter" referred to here is measured using, for example, a scanning electron microscope (SEM).

The fine organic particles are preferably incorporated at a ratio of 5% by weight to 50% by weight based on the total amount of solid components of the resin composite. In the case of a heat-resistant material, for example, the aforementioned silica fine particles are incorporated at 5% by weight to 50% by weight in order to realize both low coefficient of linear thermal expansion and high strength, are more preferably incorporated at 20% by weight to 50% by weight to further lower coefficient of linear thermal expansion, and are even more preferably incorporated at 30% by weight to 50% by weight.

A solvent can be added to adjust viscosity as necessary when impregnating resin into the regenerated fine cellulose fiber layer. Preferable examples of solvents include N,N-dimethylformamide, N-methyl-2-pyrrolidone, N-ethyl-2-pyrrolidone, tetrahydrofuran, N,N-dimethylacetoamide, dimethylsulfoxide, hexamethyl phosphoryl amide, pyridine, cyclopentanone, γ-butyrolactone, α-acetyl-γ-butyrolactone, tetramethyl urea, 1,3-dimethyl-2-imidazolinone, N-cyclohexyl-2-pyrrolidone, propylene glycol monomethyl ether, propylene glycol monomethyl ether acetate, methyl ethyl ketone, methyl isobutyl ketone, anisole, ethyl acetate, ethyl lactate and butyl lactate, and these can be used alone or two or more types can be used in combination. Among these, N-methyl-2-pyrrolidone, γ-butyrolactone and propylene glycol monomethyl ether acetate are particularly preferable. These solvents can be suitably added when impregnating resin into the regenerated fine cellulose layer corresponding to coating film thickness and viscosity.

Although there are no particular limitations on the production method used to impregnate resin into the regenerated fine cellulose layer, a prepreg lamination and molding method, consisting of shaping or laminating a prepreg obtained by impregnating a heat-curable resin composition into a thin sheet followed by heat-curing the resin while applying pressure to the shaped product and/or laminate, a resin transfer molding method, consisting of impregnating a liquid heat-curable resin composition directly into a thin sheet followed by curing the resin composition, or a protrusion method, consisting of impregnating a heat-curable resin composition by continuously passing a thin sheet through an impregnation tank filled with the heat-curable resin followed by passing through a squeeze die and heating mold to continuously draw with a tensile machine, molding and curing, can be used for the production method.

Examples of methods used to impregnate resin include a wet method and hot melt method (dry method).

In the wet method, after immersing a thin sheet in a solution obtained by dissolving an epoxy resin composition, photocurable resin composition or thermoplastic resin in a solvent such as methyl ethyl ketone, the thin film sheet is lifted out and the solvent is evaporated using an oven and the like to impregnate the resin. The hot melt method consists of a method in which an epoxy resin composition, photocurable resin composition or thermoplastic resin adjusted to low viscosity by heating is impregnated directly into a thin film sheet, and a method in which a film is prepared in which an epoxy resin composition is coated onto release paper and the like followed by superimposing the aforementioned layer from both sides or one side of reinforcing fibers, and impregnating the resin into the reinforcing fibers by hot pressing. At this time, a vacuum degassing step is preferably added to remove air. In addition, the hot melt method is used preferably since solvent does not remain in the prepreg.

The content of the fine cellulose fiber layer in the prepreg, curable resin thereof or thermoplastic resin is preferably 1% by weight to 80% by weight, more preferably 5% by weight to 50% by weight, and even more preferably 10% by weight to 30% by weight. If the weight content of the fine cellulose fiber layer is less than 1% by weight, it becomes difficult to obtain the advantages of a composite material having superior coefficient of linear thermal expansion and elastic modulus when compounding due to the excessively high resin ratio. In addition, if the weight content of the reinforcing fibers exceeds 80% by weight, the resulting composite material has excess voids thereby reducing strength required for use as a sheet due to a shortage of resin therein.

The thin sheet of the present embodiment can be preferably used as a core material for a fiber-reinforced plastic, and more specifically, as a core material for a printed wiring board, core material for an insulating film or core material for a core for electronic materials, as a prepreg for a printed wiring board, prepreg for an insulating film or prepreg for a core material for electronic materials, or as a printed wiring board, insulating film or core material. Moreover, it can also be used in a wide range of fields such as a substrate of a semiconductor device or a flexible substrate of a material having a low coefficient of linear thermal expansion. Namely, the thin sheet of the present invention can be used extremely preferably from the viewpoints of compact device size and reduced weight in insulating layers used as means for insulating each of the wiring layers during built-up lamination of printed wiring boards or printed wiring for which there is a need for reduced film thickness in the field of electronic materials in particular. In this application field, the thin sheet of the present invention can serve as a core material for fiber-reinforced plastic films that are thin and have superior adaptability to resin impregnation and other processing steps as a result of controlling to prescribed air impermeability.

In addition, the thin sheet of the present embodiment can be used as an alternative to steel sheets or carbon fiber-reinforced plastic due to its high strength and light weight resulting from compounding with resin. Examples of such applications include industrial machinery components (such as electromagnetic equipment housings, roller materials, transfer arms or health care equipment members), general machinery components, automobile, railway and vehicle components (such as outer panels, chasses, pneumatic members or seats), marine vessel members (such as hulls or seats), aircraft related components (such as fuselages, main wings, tail wings, rotor blades, fairings, cowls, doors, seats or interior materials), aerospace and artificial satellite members (such as motor cases, main wings, rotor blades or antennas), electronic and electrical components (such as personal computer cases, cell phone cases, OA equipment, AV equipment, telephones, facsimiles, home appliances or toy components), construction and civil engineering materials (such as alternative reinforcing bar materials, truss structures or suspension bridge cables), housewares, sporting and recreational goods (such as golf club shafts, fishing poles or tennis and badminton rackets), wind power generation housing members, and container and packing materials such as materials for high-pressure vessels filled with hydrogen gas and the like for use in fuel cells.

In addition to the aforementioned applications, the thin sheet of the present embodiment can also be applied as a material such as a support for various types of functional paper, absorbent materials and medical materials.

Moreover, the thin sheet of the present embodiment can also be preferably used as a separator for a power storage device. Here, the thin sheet can be applied as a power storage device separator in essentially all primary and secondary batteries (such as lithium ion secondary batteries), electrolytic capacitors (such as aluminum electrolytic capacitors), electric double-layer capacitors, or novel power storage devices requiring a separator as a constituent member thereof (such as the devices described in Japanese Unexamined Patent Publication No. 2004-079321), and with respect to the type of electrodes of the power storage device, can be applied to nearly all types of electrodes for general use, such as wound types, coin types or laminated types. In addition, the separator for a power storage device particularly preferably demonstrates its performance in electric double-layer capacitors, liquid or solid aluminum electrolytic capacitors, lithium ion secondary batteries or lithium ion capacitors. This is due to the reasons indicated below.

For example, in contrast to ordinary power storage devices employing a structure composed of an electrode, electrolyte, separator, electrolyte and electrode in that order, electric double-layer capacitors have a structure in which the electrolyte portions of the structure are each substituted for an activated carbon layer impregnated with a particle-based electrolyte having a thickness of several micrometers to several tens of micrometers. Since the activated carbon layer substantially functions as an electrode, electrolyte approaches the edge of the separator, and since the electrode has a fine particle laminated structure, there is susceptibility to the occurrence of so-called short-circuiting caused by penetration of the separator. In addition, in the case of electric double-layer capacitors, it is necessary to completely remove moisture in the active charcoal, which is extremely hygroscopic, in the production process due to problems with durability of the electrolyte. Normally, in the assembly step of electric double-layer capacitors, since moisture is removed and electrolyte is finally injected after having fabricated a laminated structure with the exception of the electrolyte, the activated carbon layer containing the separator is exposed to high temperatures in the drying step carried out for the purpose of removing moisture. In the drying step, drying is frequently carried out at a temperature of 150°C or higher in order to completely remove all moisture present in the activated carbon. Namely, the separator is required to have heat resistance capable of withstanding these conditions. Since power storage device separators have superior performance particularly with respect to short-circuit resistance and heat resistance as previously described, they function particularly preferably in electric double-layer capacitors. Moreover, the separator of the present invention also functions extremely preferably in other power storage devices such as lithium ion secondary batteries using an organic electrolyte in the same manner as electric double-layer capacitors.

In the case of using a thin sheet as a separator for a power storage device, although dependent on the type of device, a specific surface area equivalent fiber diameter of the fibers composing a fine cellulose fiber layer in particular within the range of 0.20 μm to 0.45 μm and air impermeability within the range of 5 s/100 m to 40 s/100 m enable the thin sheet to be used preferably from the viewpoint of short-circuit resistance. However, the thin sheet is not limited to these conditions.

A power storage device such as an electric double-layer capacitor that uses the separator for a power storage device of the present embodiment can be expected to demonstrate the effects indicated below.

Namely, since separator thickness can be reduced to 22 μm or less while satisfying short-circuit resistance and other basic conditions for use as a separator, and porosity within the separator can be set to a high level, internal resistance can be reduced in comparison with the case of using a conventional separator. In the case of an electric double-layer capacitor, leakage current generated by the migration of activated carbon fragments and other so-called active substances into the separator that occurs during charging can be reduced. This can also be said to be an effect based on the separator of the present embodiment being composed of a fine network and having a smaller pore diameter in comparison with conventional separators. In addition, since the amount of time required in the drying step in the production process of electric double-layer capacitors can be shortened by raising the drying temperature, this leads to improvement of productivity. In a lithium ion secondary battery, and particularly in the case of on-board applications, since there are cases in which the separator per se is required to demonstrate heat resistance that exceeds that required by consumer applications, the high level of heat resistance of the separator of the present embodiment effectively contributes to the use thereof. The separator for a power storage device of the present invention also contributes to reduction of internal resistance in other power storage devices in the same manner as in electric double-layer capacitors.

Examples

Although the following provides a more detailed explanation of the present invention through examples thereof.

[Fabrication of Thin sheet]

[Example 1] **(Reference Example)**

Regenerated fine cellulose fibers in the form of tencel cut yarn acquired from Sojitz Corp. (length: 30 mm) were placed in a washing net followed by the addition of surfactant and repeatedly washing with a washing machine to remove oily agents from the fiber surface. The resulting purified tencel fibers (cut yarn) were dispersed in water (400 L) to a solid component concentration of 1.5% by weight followed by subjecting 400 L of the aqueous dispersion to beating treatment for 20 minutes at a clearance between disks of 1 mm using a disk refiner in the form of the Model SDR14 Laboratory Refiner (pressurized disk type) manufactured by Aikawa Iron Works Co., Ltd. Continuing, beating was thoroughly carried out under conditions of decreasing the clearance to a level approaching zero to obtain a beaten aqueous dispersion (solid component concentration: 1.5% by weight). The resulting beaten aqueous dispersion was directly subjected to five rounds of diameter reduction treatment at an operating pressure of 100 MPa using a high-pressure homogenizer (Model NS015H, Niro Soavi S.p.A. (Italy)) to obtain an aqueous dispersion M1 of fine cellulose fibers (solid component concentration: 1.5% by weight in both cases).

Continuing, the aforementioned aqueous dispersion M1 was diluted to a solid component concentration of 0.1% by weight and dispersed with a blender followed by charging the papermaking slurry prepared above into a batch-type papermaking machine (automated square-type sheet machine, Kumagaya Riki Kogyo Co., Ltd., 25 cm × 25 cm, 80 mesh) installed with a plain weave fabric consisting of a blend of PET and nylon (NT20, Shikishima Canvass Co., Ltd., water permeability at 25°C: 0.03 ml/cm$^2$·s, capacity of filtering out 99% or more of fine cellulose fibers by filtering at atmospheric pressure and 25°C) based on a fine cellulose fiber sheet having a basis weight of 10 g/m$^2$, and subsequently carrying out papermaking (dehydration) at a degree of vacuum of 4 KPa relative to atmospheric pressure.

Wet paper composed of a concentrated composition in a wet state present on the resulting filter cloth was separated from the wires and after pressing for 1 minute at a pressure of 1 kg/cm$^2$, the surface of the wet paper was contacted with a drum surface followed by drying for about 120 seconds with the wet paper again contacting the drum surface in a drum dryer set so that the surface temperature in the state of two layers consisting of the wet paper and filter cloth was 130°C, and separating the filter cloth from the resulting dried bilayer cellulose sheet structure to obtain a sheet composed of white, uniform fine cellulose fibers (25 cm × 25 cm).

Moreover, the resulting fine cellulose fiber sheet was subjected to hot-press treatment at 150°C × 1.55 t/20 cm with a calendering machine (Yuriroll Co., Ltd.) to obtain thin sheet S1 fabricated with the white fine cellulose fibers indicated in the following Table 1.

[Example 2] **(Reference Example)**

A thin sheet S2 fabricated with the white fine cellulose fibers shown in the following Table 1 was obtained by using the same procedure as Example 1 with the exception of charging a papermaking slurry prepared by diluting M1 of Example 1 with water to a fine cellulose fiber sheet having a basis weight of 5 g/m$^2$.

[Example 3] **(Reference Example)**

A thin sheet S3 fabricated with the white fine cellulose fibers shown in the following Table 1 was obtained by using the same procedure as Example 1 with the exception of directly subjecting the beaten aqueous dispersion obtained in Example 1 (solid component concentration: 1.5% by weight) to 10 rounds of treatment at an operating pressure of 100 MPa using a high-pressure homogenizer (Model NS015H, Niro Soavi S.p.A. (Italy)).

[Example 4] **(Reference Example)**

A thin sheet S4 fabricated with the white fine cellulose fibers shown in the following Table 1 was obtained by using the same procedure as Example 1 with the exception of directly subjecting the beaten aqueous dispersion obtained in Example 1 (solid component concentration: 1.5% by weight) to 30 rounds of treatment at an operating pressure of 100 MPa using a high-pressure homogenizer (Model NS015H, Niro Soavi S.p.A. (Italy)).

[Example 5] **(Reference Example)**

A thin sheet S5 fabricated with the white fine cellulose fibers shown in the following Table 1 was obtained by using the same procedure as Example 1 with the exception of charging a papermaking slurry prepared by diluting M1 of Example 1 with water, adding Meikanate WEB (Meisei Chemical Works, Ltd.) at 5% by weight based on the weight of the fine cellulose fibers, and adjusting to a fine cellulose fiber sheet having a basis weight of 11 g/m$^2$.

[Example 6] **(Reference Example)**

A thin sheet S6 fabricated with the white fine cellulose fibers shown in the following Table 1 was obtained by using the same procedure as Example 1 with the exception of using regenerated cellulose fibers in the form of Bemberg acquired from Asahi Kasai Fibers Corp. as raw materials.

[Example 7] **(Reference Example)**

Natural cellulose in the form of linter pulp as raw material was immersed in water at 4% by weight followed by subjecting to heat treatment for 4 hours at 130°C in an autoclave and repeatedly washing the resulting swollen pulp with water to obtain swollen pulp impregnated with water. This was then subjected to thoroughly beating treatment using the same procedure as Example 1 followed by carrying out five rounds of diameter reduction treatment at an operating pressure of 100 MPa with a high-pressure homogenizer to obtain an aqueous dispersion M2 having a solid component concentration of 1.5% by weight. Continuing, the aqueous dispersion M1 and aqueous dispersion M2 were mixed and diluted with water so that the ratio of the solid fraction of aqueous dispersion M1 to the solid fraction of aqueous dispersion M2 was 70:25 and the solid component concentration was 0.1% by weight followed by adding Meikanate WEB (Meisei Chemical Works, Ltd.) at 5% by weight based on the weight of the fine cellulose fibers and carrying out the remainder of the procedure in the same manner as Example 1 to obtain thin sheet S7 fabricated with the white fine cellulose fibers shown in the following Table 1.

[Example 8] **(Reference Example)**

A thin sheet S8 fabricated with the white fine cellulose fibers shown in the following Table 1 was obtained by using the same procedure as Example 1 with the exception of mixing aqueous dispersion M1 and aqueous dispersion M2 were mixed and diluted with water so that the ratio of solid fraction of aqueous dispersion M1 to the solid fraction of aqueous dispersion M2 was 50:45 and the solid component concentration was 0.1% by weight followed by adding Meikanate WEB (Meisei Chemical Works, Ltd.) at 5% by weight based on the weight of the fine cellulose fibers.

[Example 9] **(Reference Example)**

Natural cellulose in the form of abaca pulp as raw material was immersed in water at 4% by weight followed by subjecting to heat treatment for 4 hours at 130°C in an autoclave and repeatedly washing the resulting swollen pulp with water to obtain swollen pulp impregnated with water. This was then subjected to thoroughly beating treatment using the same procedure as Example 1 followed by carrying out five rounds of diameter reduction treatment at an operating pressure of 100 MPa with a high-pressure homogenizer to obtain an aqueous dispersion M2 having a solid component concentration of 1.5% by weight. Continuing, the aqueous dispersion M1 and aqueous dispersion M2 were mixed and diluted with water so that the ratio of the solid fraction of aqueous dispersion M1 to the solid fraction of aqueous dispersion M2 was 90:10 and the solid component concentration was 0.1% by weight followed by carrying out the remainder of the procedure in the same manner as Example 1 to obtain thin sheet S9 fabricated with the white fine cellulose fibers shown in the following Table 1.

[Example 10-1] **(Reference Example)**

An organic polymer in the form of aramid pulp as raw material was placed in a washing net followed by the addition of surfactant and repeatedly washing with a washing machine to remove oily agents from the fiber surface. The resulting purified tencel fibers (cut yarn) were dispersed in water (400 L) to a solid component concentration of 1.5% by weight followed by subjecting 400 L of the aqueous dispersion to beating treatment for 20 minutes at a clearance between disks of 1 mm using a disk refiner in the form of the Model SDR14 Laboratory Refiner (pressurized disk type) manufactured by Aikawa Iron Works Co., Ltd. Continuing, beating was thoroughly carried out under conditions of decreasing the clearance to a level approaching zero to obtain a beaten aqueous dispersion (solid component concentration: 1.5% by weight). The resulting beaten aqueous dispersion was directly subjected to diameter reduction treatment at an operating pressure of 100 MPa using a high-pressure homogenizer (Model NS015H, Niro Soavi S.p.A. (Italy)) to obtain an aqueous dispersion M4 of aramid nanofibers (solid component concentration: 1.5% by weight in both cases). Continuing, the aqueous dispersion M1 and aqueous dispersion M4 were mixed and diluted with water so that the ratio of the solid fraction of aqueous dispersion M1 to the solid fraction of aqueous dispersion M4 was 80:15 and the solid component concentration was 0.1% by weight followed by adding Meikanate WEB (Meisei Chemical Works, Ltd.) at 5% by weight based on the weight of the fine cellulose fibers and carrying out the remainder of the procedure in the same manner as Example 1 to obtain thin sheet S10 fabricated with the white fine cellulose fibers shown in the following Table 1.

[Example 10-2] **(Reference Example)**

An organic polymer in the form of aramid pulp as raw material was placed in a washing net followed by the addition of surfactant and repeatedly washing with a washing machine to remove oily agents from the fiber surface. The resulting purified tencel fibers (cut yarn) were dispersed in water (400 L) to a solid component concentration of 1.5% by weight followed by subjecting 400 L of the aqueous dispersion to beating treatment for 20 minutes at a clearance between disks of 1 mm using a disk refiner in the form of the Model SDR14 Laboratory Refiner (pressurized disk type) manufactured by Aikawa Iron Works Co., Ltd. Continuing, beating was thoroughly carried out under conditions of decreasing the clearance to a level approaching zero to obtain a beaten aqueous dispersion (solid component concentration: 1.5% by weight). The resulting beaten aqueous dispersion was directly subjected to diameter reduction treatment at an operating pressure of 100 MPa using a high-pressure homogenizer (Model NS015H, Niro Soavi S.p.A. (Italy)) to obtain an aqueous dispersion M4 of aramid nanofibers (solid component concentration: 1.5% by weight in both cases). Continuing, the aqueous dispersion M1 and aqueous dispersion M4 were mixed and diluted with water so that the ratio of the solid fraction of aqueous dispersion M1 to the solid fraction of aqueous dispersion M4 was 60:35 and the solid component concentration was 0.1% by weight followed by adding Meikanate WEB (Meisei Chemical Works, Ltd.) at 5% by weight based on the weight of the fine cellulose fibers and carrying out the remainder of the procedure in the same manner as Example 1 to obtain thin sheet S10 fabricated with the white fine cellulose fibers shown in the following Table 1.

[Example 11] **(Reference Example)**

An organic polymer in the form of polyacrylonitrile fibers as raw material were placed in a washing net followed by the addition of surfactant and repeatedly washing with a washing machine to remove oily agents from the fiber surface. The resulting purified tencel fibers (cut yarn) were dispersed in water (400 L) to a solid component concentration of 1.5% by weight followed by subjecting 400 L of the aqueous dispersion to beating treatment for 20 minutes at a clearance between disks of 1 mm using a disk refiner in the form of the Model SDR14 Laboratory Refiner (pressurized disk type) manufactured by Aikawa Iron Works Co., Ltd. Continuing, beating was thoroughly carried out under conditions of decreasing the clearance to a level approaching zero to obtain a beaten aqueous dispersion (solid component concentration: 1.5% by weight). The resulting beaten aqueous dispersion was directly subjected to diameter reduction treatment at an operating pressure of 100 MPa using a high-pressure homogenizer (Model NS015H, Niro Soavi S.p.A. (Italy)) to obtain an aqueous dispersion M5 of polyacrylonitrile nanofibers (solid component concentration: 1.5% by weight in both cases). Continuing, the aqueous dispersion M1 and aqueous dispersion M5 were mixed and diluted with water so that the ratio of the solid fraction of aqueous dispersion M1 to the solid fraction of aqueous dispersion M5 was 80:15 and the solid component concentration was 0.1% by weight followed by adding Meikanate WEB (Meisei Chemical Works, Ltd.) at 5% by weight based on the weight of the fine cellulose fibers and carrying out the remainder of the procedure in the same manner as Example 1 to obtain thin sheet S11 fabricated with the white fine cellulose fibers shown in the following Table 1.

[Example 12] **(Reference Example)**

A thin sheet S12 fabricated with the white fine cellulose fibers shown in the following Table 1 was obtained by using the same procedure as Example 1 with the exception of adding Meikanate WEB (Meisei Chemical Works, Ltd.) at 5% by weight to the papermaking slurry prepared by diluting M1 of Example 1 with water, and charging the papermaking slurry prepared to yield a fine cellulose fiber sheet having a total basis weight of 5 g/m$^2$ onto a cellulose long fiber non-woven fabric having a basis weight of 14 g/m$^2$ acquired from Asahi Kasei Fiber Corp.

[Example 13] **(Reference Example)**

An aqueous dispersion of a commercially available epoxy-based heat-curable resin (solid component concentration: 20% by weight), $\alpha$-alumina powder (average particle diameter: 0.9 $\mu$m) and distilled water were prepared followed by preparing a coating solution from this composition so that the ratio of epoxy-based heat-curable resin to $\alpha$-alumina to water was 1/20/79. Subsequently, the aforementioned coating solution was coated onto one side of the thin sheet S1 fabricated in Example 1 by gravure roll coating so that the basis weight of the epoxy-based heat-curable resin and $\alpha$-alumina was 4 g/m$^2$. The coated thin film sheet was then subjected to heat treatment for 10 minutes at 160°C in an incubator to cure the epoxy-based heat-curable resin and obtain thin film sheet S13 fabricated with the white fine cellulose fibers shown in the following Table 1.

[Example 14] **(Reference Example)**

A thin film sheet S14 fabricated with the white fine cellulose fibers shown in the following Table 1 was obtained having an epoxy-based heat-curable resin and $\alpha$-alumina respectively laminated on the front and back sides of thin sheet 1 at a basis weight of 3 g/m$^2$ each by treating in the same manner as Example 13 with the exception of coating the aforementioned coating solution onto the thin sheet 1 fabricated in Example 1 by gravure roll coating so that the basis weight of the epoxy-based heat-curable resin and $\alpha$-alumina was 3 g/m$^2$.

[Comparative Example 1]

Reference sheet R1 shown in the following Table 1 was obtained by using the same procedure as Example 1 with the exception of charging a papermaking slurry prepared by diluting M1 of Example 1 with water to as to yield a fine cellulose fiber sheet having a basis weight of 30 g/m$^2$.

[Comparative Example 2]

Reference sheet R2 shown in the following Table 1 was obtained by using the same procedure as Example 1 with the exception of charging a papermaking slurry prepared by diluting M1 of Example 1 with water to as to yield a fine cellulose fiber sheet having a basis weight of 3 g/m$^2$.

[Comparative Example 3]

Reference sheet R3 shown in the following Table 1 was obtained by using the same procedure as Example 1 with the exception of charging a papermaking slurry prepared by diluting the aqueous dispersion M2 of natural cellulose in the form of linter pulp fabricated in Example 7 with water to as to yield a fine cellulose fiber sheet having a basis weight of 12 g/m$^2$.

[Comparative Example 4]

A cellulose long fiber non-woven fabric having a basis weight of 14 g/m$^2$ acquired from Asahi Kasei Fiber Corp. was used for reference sheet R4 shown in the following Table 1.

[Table 1]

Table 1: Structural Parameters and Properties of Thin sheets

| Sheet Sample | (1) Composition | | | | | | (2) Thickness (μm) | (3) Basis weight (g/m$^2$) | (4) Porosity (%) | (5) Specific surface area equivalent fiber diameter (μm | (6) Air impermeability (s/100 cc) |
|---|---|---|---|---|---|---|---|---|---|---|---|
| | Regenerated cellulose content (%) | Natural cellulose content (%) | Organic polymer content (%) | Reactive crosslinking agent (%) | Base material | Insulating layer | | | | | |
| S1 | 100 | 0 | 0 | 0 | Absent | Absent | 16 | 10 | 62 | 0.44 | 13 |
| S2 | 100 | 0 | 0 | 0 | Absent | Absent | 8 | 5 | 58 | 0.43 | 7 |
| S3 | 100 | 0 | 0 | 0 | Absent | Absent | 14 | 10 | 53 | 0.38 | 2,500 |
| S4 | 100 | 0 | 0 | 0 | Absent | Absent | 10 | 7 | 49 | 0.32 | 45,000 |
| S5 | 95 | 0 | 0 | 5 | Absent | Absent | 18 | 11 | 58 | 0.41 | 16 |
| S6 | 100 | 0 | 0 | 0 | Absent | Absent | 22 | 10 | 54 | 0.96 | 5 |
| S7 | 70 | 25 | 0 | 5 | Absent | Absent | 15 | 10 | 58 | 0.37 | 16 |
| S8 | 50 | 45 | 0 | 5 | Absent | Absent | 21 | 13 | 61 | 0.38 | 392 |
| S9 | 90 | 10 | 0 | 0 | Absent | Absent | 16 | 10 | 60 | 0.21 | 39 |
| S10-1 | 80 | 0 | 15 | 5 | Absent | Absent | 20 | 11 | 58 | 0.41 | 25 |
| S10-2 | 60 | 0 | 35 | 5 | Absent | Absent | 20 | 11 | 65 | 0.42 | 14 |
| 511 | 80 | 0 | 15 | 5 | Absent | Absent | 20 | 11 | 59 | 0.42 | 26 |
| S12 | 95 | 0 | 0 | 5 | Present | Absent | 22 | 19 | 62 | 0.42 | 11 |
| S13 | 100 | 0 | 0 | 0 | Absent | Present | 19 | 10 | 63 | 0.41 | 35 |
| S14 | 100 | 0 | 0 | 0 | Absent | Present | 22 | 14 | 56 | 0.39 | 80 |
| R1 | 100 | 0 | 0 | 0 | Absent | Absent | 40 | 30 | 59 | 0.44 | 5,200 |
| R2 | 100 | 0 | 0 | 0 | Absent | Absent | 1 | 3 | 58 | 0.43 | 0 |
| R3 | 0 | 100 | 0 | 0 | Absent | Absent | 15 | 12 | 48 | 0.13 | 120,000 |
| R4 | 100 | 0 | 0 | 0 | Absent | Absent | 45 | 14 | 80 | 10 | 0 |

24

EP 3 199 701 B1

[Evaluation of Thin sheets]

(1) Composition

The raw materials and content ratios of the thin sheets fabricated in Examples 1 to 14 and Comparative Examples 1 to 4 are collectively shown in Table 1.

(2) Measurement of Sample Thickness

A square piece measuring 10 cm × 10 cm was cut out from the thin sheets followed by taking the average value of five locations measured using a sheet thickness gauge manufactured by Mitutoyo Corp. (Model ID-C112XB) to be the sheet thickness d ($\mu$m).

(3) Measurement of Basis Weight of Fine Cellulose Fiber Sheets

The weight (g) per square meter was calculated for 5 locations from the sheet thickness d of the square piece measuring 10 cm × 10 cm cut out in (2) above followed by calculation of basis weight from the average value thereof.

(4) Calculation of Compact Porosity

Sheet porosity Pr (%) was evaluated for five locations based on the sheet thickness d ($\mu$m) of the square piece measuring 10 cm × 10 cm cut out in (2) above and the weight W (g) thereof followed by calculation of the average value thereof.

(5) Measurement of Specific Surface Area Equivalent Fiber Diameter

After measuring the amount of nitrogen gas adsorbed at the boiling point of liquid nitrogen for about 0.2 g of thin sheet sample with a specific surface area/micropore distribution measuring instrument (Beckman Coulter Inc.), specific surface area ($m^2$/g) was calculated using the program provided with the instrument followed by calculating specific surface area equivalent fiber diameter from the average value of three rounds of evaluation of specific surface area based on a cylindrical model in an ideal state in which there is no occurrence whatsoever of fusion between fibers and assuming a cellulose density of 1.50 g/ml (length is oc when assuming the fibers to be equivalent to cylinders having a circular cross-section).

(6) Measurement of Air Impermeability of Sheet

The amount of time taken for 100 $cm^3$ of air to penetrate the thin sheet (units: s/100 $cm^3$ was measured at room temperature using a Gurley densitometer (Model G-B2C, Toyo Seiki Co., Ltd.). Measurements were made at five points at various locations on the sheet to serve as an indicator of sheet uniformity.

[Fabrication of Composite Prepreg Sheets]

[Examples 15, 16 and 17]

Composite prepreg sheets were fabricated by impregnating a resin component into thin sheet S1. A square piece of thin sheet measuring 10 cm on a side and a spacer having a thickness of 50 $\mu$m were placed on a PET film coated with a release agent. Mixtures formulated according to the compositions shown in Table 2 that had been stirred and mixed in advance were dropped onto the thin sheet after which the PET film coated with release agent was placed thereon. The sheet was then vacuum-degassed and allowed to stand for several days at room temperature while pressing the sheet from above the PET film at 10 kg/$cm^2$ to obtain composite prepreg sheets C1, C2 and C3 in which epoxy resin was impregnated into the white fine cellulose fibers shown in the following Table 2.

[Names of Compounds Used as Compositions shown in Table 2]

Example 15: C1

Epoxy-based resin: Epoxy Resin JER828 (Mitsubishi Chemical Corp.)
Curing agent: ST12 (Mitsubishi Chemical Corp.) Example 16: C2
Epoxy-based resin: Epoxy Resin JER825 (Mitsubishi Chemical Corp.)
Curing agent: Fujicure Latent Curing Agent FXE1000 (Fuji Kasei Co., Ltd.)

Example 17: C3

Acrylic-based resin: Epoxidated Bisphenol A Dimethacrylate BPE500 (Shin-Nakamura Chemical Co., Ltd.)/Cyclomer P 230AA (Daicel Scitech Co., Ltd.) = 60/40
Initiator agent: Irgacure 819

[Fabrication of Composite Sheets]

[Examples 18 to 29 and Comparative Examples 5 to 8]

Composite prepreg sheets were fabricated by impregnating a resin component into thin sheets. A square piece of thin sheet measuring 10 cm on a side and a spacer having a prescribed thickness of were placed on a PET film coated with a release agent. The compositions shown in Table 2 that had been stirred and mixed in advance were combined with the thin sheets after which the PET film coated with release agent was placed thereon. The sheet was then vacuum-degassed while pressing the sheet from above the PET film at 10 kg/cm$^2$. The sheet was then placed in a dryer and subjected to curing or melting treatment by heat or ultraviolet rays to obtain composite sheets C4 to C15 and reference sheets RC1 to RC4 in which epoxy resin was impregnated into the white fine cellulose fibers shown in the following Table 2.

[Names of Compounds Used as Compositions shown in Table 2]

Example 18: C4

Epoxy-based resin: Epoxy Resin JER828 (Mitsubishi Chemical Corp.)
Curing agent: ST12 (Mitsubishi Chemical Corp.)

Example 19: C5

Epoxy-based resin: Epoxy Resin JER828 (Mitsubishi Chemical Corp.)
Curing agent: ST12 (Mitsubishi Chemical Corp.) Example 20: C6
Epoxy-based resin: Epoxy Resin JER825 (Mitsubishi Chemical Corp.)
Curing agent: Fujicure Latent Curing Agent FXE1000 (Fuji Kasei Co., Ltd.)
Inorganic particles: zirconia (Nissan Chemical Co., Ltd.)

Example 21: C7

Acrylic-based resin: Epoxidated Bisphenol A Dimethacrylate BPE500 (Shin-Nakamura Chemical Co., Ltd.)/Cyclomer P 230AA (Daicel Scitech Co., Ltd.) = 60/40
Initiator: Irgacure 819

Example 22: C8

Thermoplastic resin: Polypropylene sheet

Example 23: C9

Thermoplastic resin: Polyamide (Nylon 6,6)

Example 24: C10

Epoxy-based resin: Epoxy Resin JER825 (Mitsubishi Chemical Corp.)
Curing agent: Fujicure Latent Curing Agent FXE1000 (Fuji Kasei Co., Ltd.)
Inorganic particles: Colloidal silica (Nissan Chemical Industries, Ltd.)

Example 25: C11

Epoxy-based resin: Epoxy Resin JER828 (Mitsubishi Chemical Corp.)
Curing agent: ST12 (Mitsubishi Chemical Corp.)

Example 26: C12

Epoxy-based resin: Epoxy Resin JER828 (Mitsubishi Chemical Corp.)
Curing agent: ST12 (Mitsubishi Chemical Corp.)

Example 27: C13

Epoxy-based resin: Epoxy Resin JER828 (Mitsubishi Chemical Corp.)
Curing agent: ST12 (Mitsubishi Chemical Corp.)

Example 28-1: C14-1

Epoxy-based resin: Epoxy Resin JER828 (Mitsubishi Chemical Corp.)
Curing agent: ST12 (Mitsubishi Chemical Corp.)

Example 28-2: C14-2

Epoxy-based resin: Epoxy Resin JER828 (Mitsubishi Chemical Corp.)
Curing agent: ST12 (Mitsubishi Chemical Corp.)

Example 29: C15

Epoxy-based resin: Epoxy Resin JER828 (Mitsubishi Chemical Corp.)
Curing agent: ST12 (Mitsubishi Chemical Corp.)

Comparative Example 5: RC1

Epoxy-based resin: Epoxy Resin JER828 (Mitsubishi Chemical Corp.)
Curing agent: ST12 (Mitsubishi Chemical Corp.)

Comparative Example 6: RC2

Thermoplastic resin: Polypropylene sheet

Comparative Example 7: RC3

Epoxy-based resin: Epoxy Resin JER828 (Mitsubishi Chemical Corp.)
Curing agent: ST12 (Mitsubishi Chemical Corp.)

Comparative Example 8: RC4

Epoxy-based resin: Epoxy Resin JER828 (Mitsubishi Chemical Corp.)
Curing agent: ST12 (Mitsubishi Chemical Corp.)

[Table 2]

Table 2: Structural Parameters and Properties of Resin Composite Sheets

| Composite Sample | Sheet Sample Type | (1) Composition | | | | | | (2) Thickness (μm) | (3) Optical transmittance (%) | (4) Coefficient of linear thermal expansion (ppm/°C) | (5) Elastic modulus improvement |
|---|---|---|---|---|---|---|---|---|---|---|---|
| | | Epoxy-based resin | | Acrylic-based resin | | Thermoplastic resin | Inorganic particles | | | | |
| | | Monomer (%) | Curing agent (%) | Monomer type (%) | Curing agent (%) | Resin (%) | Particles (%) | | | | |
| C1 | S1 | 80 | 20 | 0 | 0 | 0 | 0 | 50 | 77 | - | - |
| C2 | S1 | 55 | 25 | 0 | 0 | 0 | 20 | 51 | 52 | - | - |
| C3 | S1 | 0 | 0 | 95 | 5 | 0 | 0 | 53 | 69 | - | - |
| C4 | S1 | 80 | 20 | 0 | 0 | 0 | 0 | 50 | 77 | 35 | A |
| C5 | S3 | 70 | 30 | 0 | 0 | 0 | 0 | 32 | 81 | 26 | A |
| C6 | S1 | 55 | 25 | 0 | 0 | 0 | 20 | 51 | 61 | 29 | A |
| C7 | S4 | 0 | 0 | 95 | 5 | 0 | 0 | 52 | 78 | 42 | A |
| C8 | S1 | 0 | 0 | 0 | 0 | 100 | 0 | 46 | 62 | 41 | A |
| C9 | S1 | 0 | 0 | 0 | 0 | 100 | 0 | 49 | 67 | 39 | A |
| C10 | S2 | 55 | 25 | 0 | 0 | 0 | 20 | 26 | 71 | 19 | A |
| C11 | S5 | 70 | 30 | 0 | 0 | 0 | 0 | 52 | 78 | 34 | A |
| C12 | S6 | 70 | 30 | 0 | 0 | 0 | 0 | 63 | 63 | 48 | A |
| C13 | S7 | 70 | 30 | 0 | 0 | 0 | 0 | 53 | 76 | 32 | A |
| C14-1 | S10-1 | 70 | 30 | 0 | 0 | 0 | 0 | 51 | 77 | 31 | A |
| C14-2 | S10-2 | 70 | 30 | 0 | 0 | 0 | 0 | 53 | 74 | 28 | A |
| C15 | S12 | 70 | 30 | 0 | 0 | 0 | 0 | 60 | 75 | 15 | A |
| RC1 | None | 70 | 30 | 0 | 0 | 0 | 0 | 50 | 88 | 95 | Reference |
| RC2 | None | 0 | 0 | 0 | 0 | 100 | 0 | 50 | 90 | 80 | Reference |
| RC3 | R3 | 70 | 30 | 0 | 0 | 0 | 0 | 50 | 43 | 82 | C |
| RC4 | R4 | 70 | 30 | 0 | 0 | 0 | 0 | 50 | 40 | 83 | C |

[Evaluation of Composite Prepreg Sheets]

(1) Composition

The raw materials and content ratios used to fabricate the composite prepreg sheets in Examples 15 to 17 are collectively shown in Table 2.

(2) Measurement of Sample Thickness

A square piece measuring 10 cm × 10 cm was cut out from the composite prepreg sheets followed by taking the average value of five locations measured using the sheet thickness gauge manufactured by Mitutoyo Corp. (Model ID-C112XB) to be the sheet thickness d ($\mu$m).

(3) Measurement of Optical Transmittance

An uncoated glass substrate was placed in the reference unit and optical transmittance was measured from 1,000 nm to 300 nm to measure optical transmittance at 800 nm of the composite prepreg sheets cut out in (2) above using the Model UV-1600PC Spectrophotometer (Shimadzu Corp.). Optical transmittance was calculated at five locations followed by calculation of the average value thereof.

[Evaluation of Composite Sheets]

(1) Composition

The raw materials and content ratios used to fabricate the composite sheets in Examples 18 to 29 and Comparative Examples 5 to 8 are collectively shown in Table 2.

(2) Measurement of Sample Thickness

A square piece measuring 10 cm × 10 cm was cut out from the composite sheets followed by taking the average value of five locations measured using the sheet thickness gauge manufactured by Mitutoyo Corp. (Model ID-C112XB) to be the sheet thickness d ($\mu$m).

(3) Measurement of Optical Transmittance

An uncoated glass substrate was placed in the reference unit and optical transmittance was measured from 1,000 nm to 300 nm to measure optical transmittance at 800 nm of the composite sheets cut out in (2) above using the Model UV-1600PC Spectrophotometer (Shimadzu Corp.). Optical transmittance was measured at five locations followed by calculation of the average value thereof.

(4) Evaluation of Coefficient of Linear Thermal Expansion

After initially raising and lowering the temperature at a rate of 10°C/min using the composite sheets cut out in (2) above, the temperature was again raised at the rate of 10°C/min followed by measurement of average coefficient of linear thermal expansion from 50°C to 200°C at that time using the Model TMA/SS6100 manufactured by Seiko Instruments, Inc.

(5) Evaluation of Improvement of Elastic Modulus

Composite sheets having a thickness of 2 mm were prepared according to the compositions of Examples 18 to 29 and Comparative Examples 5 to 8, test pieces having a width of 10 mm and length of 60 mm were cut out from resin cured products thereof, and three-point bending was carried out in accordance with JIS K7171 (1994) using an Instron Universal Tester (Instron Corp.) to measure elastic modulus. The average value of values for n=3 samples was taken to be the value of elastic modulus, and those composite sheets that demonstrated an effect of improving elastic modulus by 1.2 times or more in comparison with the elastic modulus of the uncoated reference sheet were evaluated with a "A", while those composite sheets that demonstrated an effect of improving elastic modulus by less than 1.2 times were evaluated with an "C".

[Fabrication of Electric Double-Layer Capacitors]

[Example 30]

An electric double-layer capacitor was fabricated using thin sheet S1 for the separator. The composition of the activated carbon layer used for the electrode consisted of activated carbon, conducting agent and binder at a ratio of 85:5:10 (activated carbon specific surface area: 2040 $m^2/g$ activated carbon, conducting agent: Ketjen black, binder: PVDF (#9305, KF Polymer, Kureha Corp.)), and the activated carbon, conducting agent, binder and N-methylpyrrolidone (Wako Pure Chemical Industries, Ltd.) were added and kneaded with a small-scale kneader to obtain a slurry. The resulting slurry was coated onto current collecting foil (Al foil with anchor) with a coating device (applicator) followed by drying with a hot plate for 10 minutes at 120°C. After drying, electrodes having a thickness of 83 $\mu$m and electrical conductivity of $2.5 \times 10^{-2}$ S/cm were fabricated with a calendering machine. The fabricated electrodes (measuring 14 mm $\times$ 20 mm and having an opposing surface area of 2.8 $cm^2$ for both the positive electrode and negative electrode) were then used to fabricate a single-layer laminated cell DC1 (laminated aluminum cladding) comprising S1 (drying conditions: 150°C $\times$ 12 hr) for the separator and 1.4 M TEMA·$BF_4$/PC for the electrolyte.

[Examples 31 to 36 and Comparative Examples 9 to 12]

Single-layer laminated cells DC2 to DC7 and reference cells DCR1 to DCR4 were obtained using the same procedure as Example 30 and using the compositions indicated in the following Table 3.

[Table 3]

Table 3

| Device Sample | Sheet Sample | Charge Capacity (mAh) | Discharge Capacity (mAh) | Efficiency (%) | AC Resistance ($\Omega$) | Sheet Status after Endurance Test | Air Impermeability before Endurance Test | Air Impermeability after Endurance Test | Initial Short-Circuiting | Short-Circuiting (Long-Term Stability) |
|---|---|---|---|---|---|---|---|---|---|---|
| DC1 | S1 | 0.500 | 0.473 | 94.6 | 0.33 | No change | 13 | 13 | A None | A None |
| DC2 | S2 | 0.512 | 0.487 | 95.1 | 0.29 | No change | 7 | 6 | A None | A None |
| DC3 | S7 | 0.499 | 0.470 | 94.2 | 0.35 | No change | 16 | 18 | A None | A None |
| DC4 | S9 | 0.497 | 0.465 | 93.6 | 0.37 | No change | 39 | 39 | A None | A None |
| DC5 | S5 | 0.481 | 0.454 | 94.4 | 0.34 | No change | 15 | 17 | A None | A None |
| DC6 | S13 | 0.478 | 0.450 | 94.1 | 0.39 | No change | 80 | 86 | A None | A None |
| DC7 | S14 | 0.469 | 0.441 | 94.0 | 0.42 | No change | 250 | 260 | A None | A None |
| DCR1 | R1 | 0.427 | 0.390 | 91.3 | 0.59 | No change | 28 | 32 | A None | A None |
| DCR2 | R2 | Immeasurable | Immeasurable | --- | Immeasurable | --- | 5 | --- | C Present | --- |
| DCR3 | R3 | 0.534 | 0.450 | 84.3 | 0.37 | Discoloration | 142 | 320 | A None | C Present *1 |
| DCR4 | R4 | Immeasurable | Immeasurable | --- | Immeasurable | --- | 5 | --- | C Present | --- |

*1: Short-circuits occurred in 4 of 5 samples evaluated following an endurance test.

[Performance Evaluation of Electric Double-Layer Capacitors]

The single-layer laminated cells fabricated in Examples 30 to 36 and Comparative Examples 9 to 12 were charged and discharged for 10 cycles followed by confirmation of capacity, efficiency, internal resistance, endurance testing and the presence of short-circuiting (long-term stability). The results are summarized in Table 3.

Charge/discharge conditions: Charging by constant current/constant voltage charging at 0.5 mA and 2.5 V (2 hours) followed by constant current discharging at 0.5 mA and 0 V.

$$\texttt{Efficiency (\%): Calculated as discharge}$$

$$\texttt{capacity/charge capacity} \times 100$$

Alternating current (AC) resistance: AC resistance value measured following completion of charging under conditions of a frequency of 20 KHz, amplitude of 10 mV and temperature of 25°C.

Endurance test: After charging the fabricated single-layer cells for 1,000 hours at 50°C, the single-layer cells were disassembled and the separator sheet was removed and cleaned followed by observation of the appearance thereof and measurement of air impermeability for 5 sampling points. Average values were then calculated based on the results thereof.

Presence of short-circuiting: Differences in changes in charging current were evaluated for 5 sampling points at completion of the 1st charging cycle (after 2 hours of charging) and at completion of the 200th charging cycle (after 2 hours of charging) followed by evaluating for the presence of short-circuiting based on the average values thereof.

[Fabrication of Lithium Ion Batteries]

[Example 37]

A lithium ion battery was fabricated using thin sheet S1 for the separator. In fabricating the electrodes, the composition of the positive electrode consisted of a positive electrode material, a conducting agent and a binder at a ratio of 89:6:5 (positive electrode material: Co oxide, conducting agent: acetylene black, binder: PVDF (#9305, KF Polymer, Kureha Corp.)), the composition of the negative electrode consisted of a negative electrode material, a conducting agent and a binder at a ratio of 93:2:5 (negative electrode material: graphite, conducting agent: acetylene black, binder: PVDF (#1320, KF Polymer, Kureha Corp.)), and each of the electrode materials, conducting agents, binders and N-methylpyrrolidone (Wako Pure Chemical Industries, Ltd.) were added and kneaded with a small-scale kneader to obtain a slurry. The resulting slurry was coated onto current collecting foil (Al foil, Cu foil) with a coating device (applicator) followed by drying with a hot plate for 10 minutes at 120°C. After drying, a positive electrode consisting of a positive electrode material having a thickness of 77 $\mu$m and electrical conductivity of $2.1 \times 10^{-2}$ S/cm and a negative electrode consisting of a negative electrode material having a thickness of 83 $\mu$m and electrical conductivity of $2.0 \times 10^{-1}$ S/cm were fabricated with a calendering machine.

The electrodes fabricated in the manner described above (positive electrode: 14 mm $\times$ 20 mm, negative electrode: 15 mm $\times$ 21 mm) were then used to fabricate a single-layer laminated cell LD1 (laminated aluminum cladding) having S1 for the separator (drying conditions: 150°C $\times$ 12 hr) and 1 M LiPF$_6$ (3EC/7MEC) for the electrolyte.

[Examples 38 to 43 and Comparative Examples 13 to 16]

Single-layer laminated cells LD2 to LD7 and reference cells LDR1 to LDR4 were obtained using the same procedure as Example 35 and using the compositions indicated in Table 4.

[Table 4]

Table 4

| Device Sample | Sheet Sample | Charge Capacity (mAh) | Discharge Capacity (mAh) | Efficiency (%) | AC Resistance ($\Omega$) | Initial Short-Circuiting | Short-Circuiting (Long-Term Stability) |
|---|---|---|---|---|---|---|---|
| LD1 | S1 | 9.95 | 9.10 | 91.5 | 0.54 | A None | A None |
| LD2 | S2 | 10.15 | 9.27 | 91.3 | 0.49 | A None | A None |
| LD3 | S7 | 9.97 | 8.99 | 90.2 | 0.54 | A None | A None |
| LD4 | S9 | 9.99 | 8.99 | 90.0 | 0.54 | A None | A None |
| LD5 | S5 | 9.94 | 9.07 | 91.2 | 0.55 | A None | A None |
| LD6 | S13 | 9.81 | 8.77 | 89.4 | 0.60 | A None | A None |
| LD7 | S14 | 9.72 | 8.66 | 89.1 | 0.65 | A None | A None |
| LDR1 | R1 | 9.71 | 8.79 | 90.5 | 0.76 | A None | A None |
| LDR2 | R2 | Immeasurable | Immeasurable | Immeasurable | Immeasurable | C Present | --- |
| LDR3 | R3 | 10.02 | 8.93 | 89.1 | 1.64 | A None | C Present *1 |
| LDR4 | R4 | Immeasurable | Immeasurable | Immeasurable | Immeasurable | C Present | --- |

*1: Short-circuits occurred in 2 of 5 samples evaluated following an endurance test.

[Performance Evaluation of Lithium Ion Batteries]

The single-layer laminated cells fabricated in Examples 37 to 43 and Comparative Examples 13 to 16 were charged and discharged for 1 cycle followed by confirmation of capacity, efficiency, internal resistance and the presence of short-circuiting. The results are summarized in Table 4.
Charge/discharge conditions: Charging by constant current/constant voltage charging at 0.2 mA and 4.2 V (2 hours) followed by constant current discharging at 0.2 mA and 2.7 V.

```
Efficiency (%): Calculated as discharge

capacity/charge capacity × 100
```

Alternating current (AC) resistance: AC resistance value measured following completion of charging under conditions of a frequency of 20 KHz, amplitude of 10 mV and temperature of 25°C.
Presence of short-circuiting: Differences in changes in charging current were evaluated for 5 sampling points at completion of the 1st charging cycle (after 2 hours of charging) and at completion of the 200th charging cycle (after 2 hours of charging) followed by evaluating for the presence of short-circuiting based on the average values thereof.

[Evaluation]

The thin sheets obtained in Reference Examples 1 to 14, the composite prepreg sheets of Examples 15 to 17 fabricated by compounding with each resin, and the composite sheets of Examples 18 to 29 demonstrated a high degree of resin impregnability into the thin sheets and facilitated compounding since they enable the design of a thin sheet having a large pore diameter and high porosity as a result of using regenerated cellulose having a specific surface area equivalent fiber diameter of 0.20 μm to 2.0 μm. In addition, as a result of using nanofibers, improvement of transparency and resin thermal stability were demonstrated when compounding with resin, and in comparison with Comparative Example 5 or 6 in particular, effects of reducing the coefficient of linear thermal expansion and improving elastic modulus were demonstrated.
Moreover, thin sheets containing aramid nanofibers demonstrated higher porosity, and simultaneous to facilitating resin impregnation, were observed to tend to improve thermal stability when in the form of a composite sheet.
In contrast, in the case of the reference sheets obtained in Comparative Examples 1 to 4 and the composite sheets of Comparative Examples 7 and 8, which were fabricated by compounding with each resin, it was difficult to impregnate resin even when compounded due to the specific surface area equivalent fiber diameter being 0.1 μm, and coefficient of linear thermal expansion was determined to be unable to be reduced due to a lack of cellulose fiber confounding points even if compounded since the specific surface area equivalent fiber diameter was 10 μm.
In addition, in evaluating the performance of the electric double-layer capacitors and lithium ion batteries that used the thin sheets obtained in Examples 1 to 14 as separators, thin sheets were able to be designed that have a large pore diameter and high porosity as a result of using regenerated cellulose having a specific surface area equivalent fiber diameter of 0.20 μm to 0.45 μm, and were determined to retain adequate performance as a separator for a power storage device in terms of initial performance and long-term durability.
On the other hand, in evaluating the performance of the electric double-layer capacitors and lithium ion batteries that used the thin sheets obtained in Comparative Examples 1 to 4 as separators, short-circuiting occurred at an early stage in all cases, and although the separators did not function as a separator or functioned as separators having comparatively low resistance without the occurrence of short-circuiting, they were confirmed to be inferior to the examples in terms of long-term durability.

INDUSTRIAL APPLICABILITY

The thin sheet of the present **embodiment** is thin, has superior uniformity and retains a limited range of air impermeability, or in other words, retains pore diameter. For this reason, when using as a base material for fiber-reinforced plastic, thermal stability (in terms of reduction of the coefficient of linear thermal expansion and retention of elasticity at high temperatures) can be imparted when compounding with resin. In addition, when using as a base material for an insulating film for an electronic material, sheet strength of the thin film and thermal stability can both be ensured. Moreover, when using as a separator for a power storage device, superior short-circuit resistance, heat resistance and physiochemical stability are demonstrated despite being a thin sheet, and a power storage device using this separator is able to realize superior electrical characteristics (such as low internal resistance or small leakage current value) and long-term stability. Thus, the thin sheet of the present **embodiment** can be preferably used in these technical fields.

**Claims**

**1.** A composite prepreg sheet containing:

(A) a thin sheet composed of a single layer or multiple layers of three layers or less, which includes at least one layer of fine cellulose fibers containing 50% by weight or more of regenerated fine cellulose fibers, and satisfies the following requirements:

(1) the specific surface area equivalent fiber diameter of fibers that compose the layer of fine cellulose fibers, determined as described in the description, is 0.20 $\mu$m to 2.0 $\mu$m,
(2) the air impermeability, determined as described in the description, is 1 s/100 ml to 100,000 s/ml, and
(3) the sheet thickness, determined as described in the description, is 2 $\mu$m to 22 $\mu$m,
and

(B) a heat-curable resin and/or a photo-curable resin.

**2.** The composite prepreg sheet according to claim 1, wherein the specific surface area equivalent fiber diameter of fibers that compose the layer of fine cellulose fibers is 0.20 $\mu$m to 0.45 $\mu$m.

**3.** The composite prepreg sheet according to claim 1 or 2, wherein natural fine cellulose fibers are contained in the layer of fine cellulose fibers at less than 50% by weight.

**4.** The composite prepreg sheet according to any of claims 1 to 3, wherein fine fibers composed of an organic polymer other than cellulose are contained in the layer of fine cellulose fibers at less than 50% by weight.

**5.** The composite prepreg sheet according to any of claims 1 to 4, wherein the fine cellulose fiber layer contains a reactive crosslinking agent at 10% by weight or less.

**6.** The composite prepreg sheet according to any of claims 1 to 5, wherein a base layer in the form of a nonwoven fabric or paper having a basis weight of 3 g/m$^2$ to 20 g/m$^2$ is contained as one layer of the multilayer structure having three layers or less.

**7.** The composite prepreg sheet according to any of claims 1 to 6, wherein the resin (B) contains inorganic particles at less than 50% by weight.

**8.** The composite prepreg sheet according to claim 7, wherein the inorganic particles are one or more types of inorganic particles selected from the group consisting of SiO$_2$, TiO$_2$, Al$_2$O$_3$, ZrO$_2$, MgO, ZnO and BaTiO$_3$ particles.

**Patentansprüche**

**1.** Verbund-Prepreg-Platte, enthaltend:

(A) eine dünne Platte, die aus einer einzelnen Schicht oder mehreren Schichten aus drei Schichten oder weniger besteht und wenigstens eine Schicht aus feinen Cellulosefasern, die 50 Gew.-% oder mehr regenerierte feine Cellulosefasern enthalten, umfasst und die folgenden Anforderungen erfüllt:

(1) der einer spezifischen Oberfläche äquivalente Faserdurchmesser von Fasern, die die Schicht aus feinen Cellulosefasern bilden, der so bestimmt wird, wie es in der Beschreibung beschrieben ist, 0,20 $\mu$m bis 2,0 $\mu$m beträgt;
(2) die Luftundurchlässigkeit, die so bestimmt wird, wie es in der Beschreibung beschrieben ist, 1 s/100 ml bis 100 000 s/ml beträgt; und
(3) die Schichtdicke, die so bestimmt wird, wie es in der Beschreibung beschrieben ist, 2 $\mu$m bis 22 $\mu$m beträgt; und

(B) ein wärmehärtbares Harz und/oder ein lichthärtbares Harz.

**2.** Verbund-Prepreg-Platte gemäß Anspruch 1, wobei der einer spezifischen Oberfläche äquivalente Faserdurchmesser von Fasern, die die Schicht aus feinen Cellulosefasern bilden, 0,20 μm bis 0,45 μm beträgt.

3. Verbund-Prepreg-Platte gemäß Anspruch 1 oder 2, wobei natürliche feine Cellulosefasern in der Schicht aus feinen Cellulosefasern in einem Anteil von weniger als 50 Gew.-% enthalten sind.

4. Verbund-Prepreg-Platte gemäß einem der Ansprüche 1 bis 3, wobei feine Fasern, die aus einem anderen organischen Polymer als Cellulose bestehen, in der Schicht aus feinen Cellulosefasern in einem Anteil von weniger als 50 Gew.-% enthalten sind.

5. Verbund-Prepreg-Platte gemäß einem der Ansprüche 1 bis 4, wobei die Schicht aus feinen Cellulosefasern ein reaktives Vernetzungsmittel in einem Anteil von 10 Gew.-% oder weniger enthält.

6. Verbund-Prepreg-Platte gemäß einem der Ansprüche 1 bis 5, wobei eine Basisschicht in Form eines Vliesstoffs oder von Papier mit einer flächenbezogenen Masse von 3 g/m$^2$ bis 20 g/m$^2$ als eine Schicht der Mehrschichtstruktur, die drei Schichten oder weniger aufweist, enthalten ist.

7. Verbund-Prepreg-Platte gemäß einem der Ansprüche 1 bis 6, wobei das Harz (B) anorganische Teilchen in einem Anteil von weniger als 50 Gew.-% enthält.

8. Verbund-Prepreg-Platte gemäß Anspruch 7, wobei es sich bei den anorganischen Teilchen um einen oder mehrere Typen von anorganischen Teilchen handelt, die aus der Gruppe ausgewählt sind, die aus SiO$_2$-, TiO$_2$-, Al$_2$O$_3$-, ZrO$_2$-, MgO-, ZnO- und BaTiO$_3$-Teilchen besteht.

## Revendications

1. Feuille de pré-imprégné composite contenant :

   (A) une feuille mince constituée d'une seule couche ou de couches multiples de trois couches ou moins, qui inclut au moins une couche de fines fibres de cellulose contenant 50 % en masse ou plus de fines fibres de cellulose régénérée, et satisfait les exigences suivantes :

   (1) le diamètre de fibre équivalent en surface spécifique des fibres qui composent la couche de fines fibres de cellulose, déterminé comme décrit dans la description, est de 0,20 μm à 2,0 μm,
   (2) l'imperméabilité à l'air, déterminée comme décrit dans la description, est de 1 s/100 ml à 100 000 s/ml, et
   (3) l'épaisseur de feuille, déterminée comme décrit dans la description, est de 2 μm à 22 μm, et

   (B) une résine thermodurcissable et/ou une résine photodurcissable.

2. Feuille de pré-imprégné composite selon la revendication 1, dans laquelle le diamètre de fibre équivalent en surface spécifique des fibres qui composent la couche de fines fibres de cellulose est de 0,20 μm à 0,45 μm.

3. Feuille de pré-imprégné composite selon la revendication 1 ou 2, dans laquelle de fines fibres de cellulose naturelle sont contenues dans la couche de fines fibres de cellulose à moins de 50 % en masse.

4. Feuille de pré-imprégné composite selon l'une quelconque des revendications 1 à 3, dans laquelle de fines fibres composées d'un polymère organique différent de la cellulose sont contenues dans la couche de fines fibres de cellulose à moins de 50 % en masse.

5. Feuille de pré-imprégné composite selon l'une quelconque des revendications 1 à 4, dans laquelle la couche de fines fibres de cellulose contient un agent de réticulation réactif à 10 % en masse ou moins.

6. Feuille de pré-imprégné composite selon l'une quelconque des revendications 1 à 5, dans laquelle une couche de base dans la forme d'un textile non tissé ou papier ayant une masse de base de 3 g/m$^2$ à 20 g/m$^2$ est contenue comme une couche de la structure multicouche ayant trois couches ou moins.

7. Feuille de pré-imprégné composite selon l'une quelconque des revendications 1 à 6, dans laquelle la résine (B) contient des particules inorganiques à moins de 50 % en masse.

8. Feuille de pré-imprégné composite selon la revendication 7, dans laquelle les particules inorganiques sont un ou plusieurs types de particules inorganiques choisies dans le groupe consistant en particules de $SiO_2$, $TiO_2$, $Al_2O_3$, $ZrO_2$, MgO, ZnO et $BaTiO_3$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010287697 A
- JP S6083826 A
- JP 4628764 B
- WO 2006004012 A
- JP 2000003834 A

- US 3265641 A
- JP 4753874 B
- JP 2011042903 A
- JP 2004079321 A


**Non-patent literature cited in the description**

- **H. ONO et al.** *Trans. Mat. Res. Soc. Jpn.,* 2001, vol. 26, 569-572

- **ISOGAI, A. et al.** *Biomacromolecules,* 2006, vol. 7, 1687-1691